# EUROPEAN PATENT APPLICATION

(11) **EP 4 808 261 A1**
(43) Date of publication of application: **16.09.2026**
(21) Application number: 24893267.5
(22) Date of filing: 08.11.2024
(51) Int. Cl.: H04W 76/12

(54) **METHOD, DEVICE AND SYSTEM FOR SHARING SECURE PROTOCOL TUNNEL**

(30) Priority: 24.11.2023 CN 202311591930
(71) Applicant: Huawei Technologies Co., Ltd., Shenzhen, Guangdong 518129 (CN)
(72) Inventor: HE, Qi, Shenzhen, Guangdong 518129 (CN); PAN, Wei, Shenzhen, Guangdong 518129 (CN); CHEN, Xiaolan, Shenzhen, Guangdong 518129 (CN); DING, Beijing, Shenzhen, Guangdong 518129 (CN); DU, Zhibin, Shenzhen, Guangdong 518129 (CN); XUE, Wan, Shenzhen, Guangdong 518129 (CN)
(74) Representative: Maiwald GmbH
(86) International application number: PCT/CN2024/130899
(87) International publication number: WO 2025/108109

(57) **Abstract**

This application relates to the field of communication technologies, and discloses a method for sharing a security protocol tunnel, a device, and a system, enabling a plurality of service instances to share a same security tunnel. This improves utilization of the security tunnel while ensuring more reliable and efficient service operation. In this application, network devices allow a plurality of operators to share a same security tunnel between the network devices, and the network devices may establish and manage an association relationship between the security tunnel and service instances, so as to implement service isolation even when the security tunnel is shared by the plurality of operators. Based on this, resources such as system computing, storage, and IP addresses can be saved, operation and maintenance costs of customers can be reduced, and security tunnel selection and smooth identification and parsing at a receive end during subsequent data transmission between the network devices can be facilitated.

## Description

This application claims priority to Chinese Patent Application No. 202311591930.4, filed with the China National Intellectual Property Administration on November 24, 2023 and entitled "METHOD FOR SHARING SECURITY PROTOCOL TUNNEL, DEVICE, AND SYSTEM", which is incorporated herein by reference in its entirety.

### TECHNICAL FIELD

This application relates to the field of communication technologies, and in particular, to a method for sharing a security protocol tunnel, a device, and a system.

### BACKGROUND

Currently, in the 3rd generation partnership project (3rd generation partnership project, 3GPP), security self-setup over an X2/Xn interface is already supported, for example, direct establishment of a security protocol tunnel (hereinafter referred to as a "security tunnel"), such as an IP security (internet protocol security, IPsec) tunnel, between two base stations is supported. In a multi-operator base station scenario, for example, in a scenario in which a base station serves a plurality of operators at the same time, transmission isolation and data isolation are required between the operators. Therefore, different operators usually use different virtual routing and forwarding (virtual routing and forwarding, VRF) instances, and different VRF instances require separate security tunnels.

However, due to IPsec resource constraints, a quantity of security tunnels that can be established by a base station is usually limited. Based on this, in a case of a limited quantity of security tunnels supported by a base station, how to improve utilization of security tunnels in the multi-operator base station scenario is a problem that needs to be resolved.

### SUMMARY

This application provides a method for sharing a security protocol tunnel, a device, and a system, to share a same security tunnel through a plurality of service instances, so as to improve utilization of the security tunnel, and ensure more reliable and efficient service running.

To achieve the foregoing objective, this application uses the following technical solutions.

According to a first aspect, a method for establishing a security protocol tunnel is provided. The method is applied to a first network device, and the method may include: First, the first network device sends, to a second network device, a first packet including first information, where the first packet indicates to establish a security protocol tunnel between the first network device and the second network device, and the first information indicates a service instance of the first network device; then, the first network device receives a second packet from the second network device, where the second packet is a response of the second network device to the first packet, the second packet carries second information, and the second information indicates a service instance of the second network device; and finally, the first network device completes the establishment of the security protocol tunnel with the second network device based on the second packet, and associates the security protocol tunnel with the service instance of the first network device and the service instance determined by the second network device based on the first information.

In an example, one or more security protocol tunnels may be established between the first network device and the second network device. Any security protocol tunnel between the first network device and the second network device may be established based on the foregoing method and associated with a corresponding service instance.

According to the solution provided in the first aspect, the first network device may support a plurality of operators served by the first network device in sharing a security protocol tunnel between the first network device and another network device (for example, the second network device), and may establish and manage an association relationship between the security tunnel and a service instance, to support service isolation when the security tunnel is shared by the plurality of operators. Based on this, resources such as system computing, storage, and IP addresses can be saved, operation and maintenance costs of customers can be reduced, and security tunnel selection and smooth identification and parsing of a receive end during subsequent data transmission between the network devices can be facilitated.

In a possible implementation, the method further includes: The first network device sends a third packet to the second network device, where the third packet indicates to modify the security protocol tunnel between the first network device and the second network device; and the first network device modifies one or more security protocol tunnels between the first network device and the second network device. Based on this, more flexible security tunnel sharing can be implemented. For example, a network device may negotiate with another network device at any time regarding security tunnel management based on an actual requirement, including modifying the security tunnel as required. Through on-demand adjustments, on-demand allocation of resources such as system computing, storage, and IP addresses is supported, so as to implement more scientific resource allocation.

In a possible implementation, the method further includes: The first network device indicates the second network device to update a key of the service instance associated with the security protocol tunnel between the first network device and the second network device. For example, the first network device may indicate, in response to a request for updating a key of a service instance, the second network device to update a key of a service instance associated with a security protocol tunnel. Based on this, more secure and reliable security tunnel data transmission may be implemented by updating the key of the service instance. In an example, the first network device may indicate, via a rekey message, the second network device to update a key of a service instance associated with a security protocol tunnel.

In a possible implementation, the modifying the security protocol tunnel between the first network device and the second network device includes one or more of the following: deleting an association relationship between the security protocol tunnel and the service instance, and adding an association relationship between the security protocol tunnel and the service instance.

For example, the first network device may send, to the second network device in response to a request for deleting the security tunnel, a packet indicating to delete the security protocol tunnel between the first network device and the second network device. For another example, the first network device may send, to the second network device in response to a request for deleting the association relationship between the security tunnel and the service instance, a packet indicating to delete an association relationship between a target security tunnel and a target service instance. For another example, the first network device may send, to the second network device in response to a request for adding the association relationship between the security tunnel and the service instance, a packet indicating to add an association relationship between a target security tunnel and a service instance.

Based on this, more flexible security tunnel sharing can be implemented. For example, a network device may negotiate with another network device at any time regarding security tunnel management based on an actual requirement, including adding or deleting a security tunnel as required, and adding or deleting an association relationship between a security tunnel and a service instance as required. Through on-demand adjustments, on-demand allocation of resources such as system computing, storage, and IP addresses is supported, so as to implement more scientific resource allocation.

In a possible implementation, the third packet indicates to delete the association relationship between the service instance and the security protocol tunnel between the first network device and the second network device, the third packet carries a first message, and the first message includes an INFORMATIONAL message. For example, the third packet may indicate, via a DELETE payload carried in the INFORMATIONAL message, to delete the security protocol tunnel between the first network device and the second network device, or indicate to delete the association relationship between the security protocol tunnel and the service instance. Based on this, a security tunnel may be deleted as required or an association relationship between a security tunnel and a service instance may be deleted as required in different communication scenarios, so as to implement on-demand allocation of resources such as system computing, storage, and IP addresses.

In a possible implementation, the third packet indicates to add the association relationship between the security protocol tunnel and the service instance, the third packet carries a second message, and the second message includes a CREATE_CHILD_SA message, an INFORMATIONAL message, or an IKE_SA_INIT message. For example, the third packet may indicate, via the CREATE_CHILD_SA message, a NOTIFY payload carried in the INFORMATIONAL message, a NOTIFY payload carried in the IKE_SA_INIT message, and the like, to add the association relationship between the security protocol tunnel and the service instance. Based on this, an association relationship between a security tunnel and a service instance may be added as required in different communication scenarios, so as to implement on-demand allocation of resources such as system computing, storage, and IP addresses.

In a possible implementation, the method further includes: The first network device sends a fourth packet to the second network device, where the fourth packet indicates that the first network device has a capability of associating a service instance with a security protocol tunnel; and the first network device receives a fifth packet from the second network device, where the fifth packet indicates that the second network device has the capability of associating a service instance with a security protocol tunnel. Based on this, both communication parties can conveniently learn whether each other has the capability of associating a service instance with a security protocol tunnel, to determine, based on the capability of each other, whether to negotiate a service instance corresponding to the security tunnel subsequently, so as to avoid a problem that, when one party (for example, the second network device) does not have the capability of associating a service instance with a security protocol tunnel, a receiver may cause a processing error when the other party (for example, the first network device) that has the capability of associating a service instance with a security protocol tunnel sends service instance negotiation information to the second network device. In an example, the fourth packet and the first packet may be a same packet.

In a possible implementation, the fourth packet carries a third message, and the third message includes an IKE_SA_INIT message, an IKE_AUTH message, a CREATE_CHILD_SA message, and an INFORMATIONAL message. For example, the fourth packet may notify, via a NOTIFY payload carried in the IKE_SA_INIT message, a NOTIFY payload carried in the IKE_AUTH message, a NOTIFY payload carried in the CREATE_CHILD_SA message, or a NOTIFY payload carried in an INFORMATIONAL message, the second network device whether the first network device has the capability of associating a service instance with a security protocol tunnel. Based on this, notification of a service instance negotiation capability may be supported in different communication scenarios, to support subsequent selection of a communication policy.

In a possible implementation, the first network device may communicate with the second network device according to the IKEv2 protocol.

In an example, the security protocol tunnel may include an IPsec tunnel.

Certainly, a communication protocol is not limited in this application. In some scenarios, the first network device may alternatively communicate with the second network device according to another protocol, to implement the solution provided in this application. In addition, the security protocol tunnel between the first network device and the second network device may alternatively be a security tunnel according to another protocol.

According to a second aspect, a data transmission method is provided. The method may be applied to a first network device, and the method may include: The first network device sends, to a second network device through a first security protocol tunnel, a data packet carrying service data, where the data packet includes an identifier of a first service instance corresponding to the service data, and the first security protocol tunnel has an association relationship with the first service instance.

According to the solution provided in the second aspect, a transmit end of a data packet may transmit, through a security protocol tunnel that has an association relationship with a service instance, service data related to the service instance, and include, in the data packet, an identifier of the service instance corresponding to the service data, so that a receive end of the data packet may perform subsequent verification of the data packet based on the identifier of the service instance that is carried in the data packet, and select a matching security policy to parse the data packet, so as to support efficient, reliable, and orderly transmission of the service data based on a shared security protocol tunnel.

In a possible implementation, the identifier of the first service instance is located in one or more of the following fields of the data packet: an unencrypted internet protocol version (Internet Protocol version, IPv)4 header, an encrypted IPv4 header, an unencrypted IPv6 header or IPv6 extension header, and an encrypted IPv6 header or extension header. Based on this, carrying of an identifier of a service instance may be supported in different communication scenarios, to support subsequent efficient, reliable, and orderly transmission of service data.

In a possible implementation, before the first network device sends the data packet to the second network device through the first security protocol tunnel, the method further includes: At a tunnel interface of the first security protocol tunnel, the first network device encrypts the service data according to a security policy corresponding to the first service instance, and then encapsulates the encrypted service data into the data packet. Based on this, secure and reliable transmission of the service data can be ensured.

In a possible implementation, the first network device may communicate with the second network device according to the IKEv2 protocol. In an example, the security protocol tunnel may include an IPsec tunnel. Certainly, a communication protocol is not limited in this application. In some scenarios, the first network device may alternatively communicate with the second network device according to another protocol, to implement the solution provided in this application. In addition, the security protocol tunnel between the first network device and the second network device may alternatively be a security tunnel according to another protocol.

According to a third aspect, a method for establishing a security protocol tunnel is provided. The method may be applied to a second network device, and the method may include: First, the second network device receives a first packet from a first network device, where the first packet indicates to establish a security protocol tunnel between the first network device and the second network device, the first packet includes first information, and the first information indicates a service instance of the first network device; then, the second network device sends a second packet to the first network device, where the second packet is a response of the second network device to the first packet, the second packet carries second information, and the second information indicates a service instance determined by the second network device based on the first information; and finally, the second network device completes the establishment of the security protocol tunnel with the first network device based on the first packet, and associates the security protocol tunnel with the service instance indicated by the second information.

In an example, one or more security protocol tunnels may be established between the first network device and the second network device. Any security protocol tunnel between the first network device and the second network device may be established based on the foregoing method and associated with a corresponding service instance.

According to the solution provided in the third aspect, the second network device may support a plurality of operators served by the second network device in sharing a security protocol tunnel between the first network device and another network device (for example, the first network device), and may establish and manage an association relationship between the security tunnel and a service instance, to support service isolation when the security tunnel is shared by the plurality of operators. Based on this, resources such as system computing, storage, and IP addresses can be saved, operation and maintenance costs of customers can be reduced, and security tunnel selection and smooth identification and parsing of a receive end during subsequent data transmission between the network devices can be facilitated.

In a possible implementation, the method further includes: The second network device receives a third packet from the first network device, where the third packet indicates to modify the security protocol tunnel between the first network device and the second network device; and the second network device modifies one or more security protocol tunnels between the first network device and the second network device based on the third packet. Based on this, more flexible security tunnel sharing can be implemented. For example, a network device may negotiate with another network device at any time regarding security tunnel management based on an actual requirement, including modifying the security tunnel as required. Through on-demand adjustments, on-demand allocation of resources such as system computing, storage, and IP addresses is supported, so as to implement more scientific resource allocation.

In a possible implementation, the method further includes: The second network device updates, based on an indication of the first network device, a key of the service instance associated with the security protocol tunnel between the first network device and the second network device. Based on this, more secure and reliable security tunnel data transmission may be implemented by updating the key of the service instance. In an example, the first network device may indicate, via a rekey message, the second network device to update a key of a service instance associated with a security protocol tunnel.

In a possible implementation, the modifying the security protocol tunnel between the first network device and the second network device includes one or more of the following: deleting an association relationship between the security protocol tunnel and the service instance, and adding an association relationship between the security protocol tunnel and the service instance. Based on this, more flexible security tunnel sharing can be implemented. For example, a network device may negotiate with another network device at any time regarding security tunnel management based on an actual requirement, including adding or deleting a security tunnel as required, and adding or deleting an association relationship between a security tunnel and a service instance as required. Through on-demand adjustments, on-demand allocation of resources such as system computing, storage, and IP addresses is supported, so as to implement more scientific resource allocation.

In a possible implementation, the third packet indicates to delete the association relationship between the service instance and the security protocol tunnel between the first network device and the second network device, the third packet carries a first message, and the first message includes an INFORMATIONAL message. For example, the third packet may indicate, via a DELETE payload carried in the INFORMATIONAL message, to delete the security protocol tunnel between the first network device and the second network device, or indicate to delete the association relationship between the security protocol tunnel and the service instance. Based on this, a security tunnel may be deleted as required or an association relationship between a security tunnel and a service instance may be deleted as required in different communication scenarios, so as to implement on-demand allocation of resources such as system computing, storage, and IP addresses.

In a possible implementation, the third packet indicates to add the association relationship between the security protocol tunnel and the service instance, the third packet carries a second message, and the second message includes a CREATE_CHILD_SA message, an INFORMATIONAL message, or an IKE_SA_INIT message. For example, the third packet may indicate, via the CREATE_CHILD_SA message, a NOTIFY payload carried in the INFORMATIONAL message, a NOTIFY payload carried in the IKE_SA_INIT message, and the like, to add the association relationship between the security protocol tunnel and the service instance. Based on this, an association relationship between a security tunnel and a service instance may be added as required in different communication scenarios, so as to implement on-demand allocation of resources such as system computing, storage, and IP addresses.

In a possible implementation, the method further includes: The second network device receives a fourth packet from the first network device, where the fourth packet indicates that the first network device has a capability of associating a service instance with a security protocol tunnel; and the second network device sends a fifth packet to the first network device, where the fifth packet indicates that the second network device has the capability of associating a service instance with a security protocol tunnel. Based on this, both communication parties can conveniently learn whether each other has the capability of associating a service instance with a security protocol tunnel, to determine, based on the capability of each other, whether to negotiate a service instance corresponding to the security tunnel subsequently, so as to avoid a problem that, when one party (for example, the second network device) does not have the capability of associating a service instance with a security protocol tunnel, a receiver may cause a processing error when the other party (for example, the first network device) that has the capability of associating a service instance with a security protocol tunnel sends service instance negotiation information to the second network device.

In a possible implementation, the fifth packet carries a third message, and the third message includes an IKE_SA_INIT message, an IKE_AUTH message, a CREATE_CHILD_SA message, and an INFORMATIONAL message. For example, the fifth packet may notify, via a NOTIFY payload carried in the IKE_SA_INIT message, a NOTIFY payload carried in the IKE_AUTH message, a NOTIFY payload carried in the CREATE_CHILD_SA message, or a NOTIFY payload carried in an INFORMATIONAL message, the second network device whether the first network device has the capability of associating a service instance with a security protocol tunnel. Based on this, notification of a service instance negotiation capability may be supported in different communication scenarios, to support subsequent selection of a communication policy.

In a possible implementation, the second network device may communicate with the first network device according to the IKEv2 protocol.

In an example, the security protocol tunnel may include an IPsec tunnel.

Certainly, a communication protocol is not limited in this application. In some scenarios, the second network device may alternatively communicate with the first network device according to another protocol, to implement the solution provided in this application. In addition, the security protocol tunnel between the second network device and the first network device may alternatively be a security tunnel according to another protocol.

According to a fourth aspect, a data transmission method is provided. The method may be applied to a second network device, and the method may include: First, the second network device receives a data packet sent by a first network device through a first security protocol tunnel, where the data packet includes service data and an identifier of a first service instance corresponding to the service data, the first security protocol tunnel is one of one or more security protocol tunnels between the first network device and the second network device, and the first security protocol tunnel has an association relationship with the first service instance; then, the second network device determines a security policy of the data packet based on the identifier of the first service instance; and finally, the second network device parses the data packet according to the determined security policy, to obtain the service data.

According to the solution provided in the fourth aspect, a transmit end (for example, the first network device) of a data packet may transmit, through a security protocol tunnel that has an association relationship with a service instance, service data related to the service instance, and include, in the data packet, an identifier of the service instance corresponding to the service data, so that a receive end (for example, the second network device) of the data packet may select a matching security policy based on the identifier of the service instance that is carried in the data packet, to parse the data packet, so as to support efficient, reliable, and orderly transmission of the service data based on a shared security protocol tunnel.

In a possible implementation, the identifier of the first service instance is located in one or more of the following fields of the data packet: an unencrypted IPv4 header, an encrypted IPv4 header, an unencrypted IPv6 header or IPv6 extension header, and an encrypted IPv6 header or extension header. Based on this, carrying of an identifier of a service instance may be supported in different communication scenarios, to support subsequent efficient, reliable, and orderly transmission of service data.

In a possible implementation, the second network device parses the data packet to obtain the service data includes: The second network device parses the data packet according to a security policy corresponding to the first service instance, to obtain the service data. Based on this, secure and reliable transmission of the service data and successful data parsing can be ensured.

In a possible implementation, the second network device may communicate with the first network device according to the IKEv2 protocol. In an example, the security protocol tunnel may include an IPsec tunnel. Certainly, a communication protocol is not limited in this application. In some scenarios, the second network device may alternatively communicate with the first network device according to another protocol, to implement the solution provided in this application. In addition, the security protocol tunnel between the first network device and the second network device may alternatively be a security tunnel according to another protocol.

According to a fifth aspect, a network device is provided. The network device may include: a transceiver, configured to send and receive signals; a memory, configured to store computer program instructions and data; and a processor, configured to execute the computer program instructions, to support the network device in implementing the method according to any one of the possible implementations of the first aspect, the second aspect, the third aspect, or the fourth aspect.

According to a sixth aspect, a communication system is provided. The communication system includes a first network device and a second network device. The first network device is configured to implement the method according to any one of the possible implementations of the first aspect or the second aspect, and the second network device is configured to implement the method according to any one of the possible implementations of the third aspect or the fourth aspect.

According to a seventh aspect, a computer-readable storage medium is provided. The computer-readable storage medium stores computer program instructions. When the computer program instructions are executed by a processor, the method according to any one of the possible implementations of the first aspect, the second aspect, the third aspect, or the fourth aspect is implemented.

According to an eighth aspect, a computer program product including instructions is provided. When the computer program product runs on a computer, the computer is caused to implement the method according to any one of the possible implementations of the first aspect, the second aspect, the third aspect, or the fourth aspect.

According to a ninth aspect, a chip system is provided. The chip system includes a processing circuit and a storage medium. The storage medium stores computer program instructions. When the computer program instructions are executed by a processor, the method according to any one of the possible implementations of the first aspect, the second aspect, the third aspect, or the fourth aspect is implemented. The chip system may include a chip, or may include a chip and another discrete component.

### BRIEF DESCRIPTION OF DRAWINGS

FIG. 1 is a diagram of a system architecture according to an embodiment of this application;
FIG. 2 is a diagram of conventional data transmission based on a security tunnel;
FIG. 3A is a diagram of data transmission based on a security tunnel according to an embodiment of this application;
FIG. 3B is a diagram of a packet encryption process according to an embodiment of this application;
FIG. 3C is a diagram of another packet encryption process according to an embodiment of this application;
FIG. 4 is a diagram of a hardware structure of a network device according to an embodiment of this application;
FIG. 5 is a diagram of a process of data transmission between network devices according to an embodiment of this application;
FIG. 6 is a first diagram of an example of a message used for capability negotiation according to an embodiment of this application;
FIG. 7 is a second diagram of an example of a message used for capability negotiation according to an embodiment of this application;
FIG. 8 is a first diagram of an example of a message used to carry service instance negotiation information according to an embodiment of this application;
FIG. 9 is a second diagram of an example of a message used to carry service instance negotiation information according to an embodiment of this application;
FIG. 10 is a third diagram of an example of a message used to carry service instance negotiation information according to an embodiment of this application;
FIG. 11 is a fourth diagram of an example of a message used to carry service instance negotiation information according to an embodiment of this application;
FIG. 12 is a fifth diagram of an example of a message used to carry service instance negotiation information according to an embodiment of this application;
FIG. 13 is a sixth diagram of an example of a message used to carry service instance negotiation information according to an embodiment of this application;
FIG. 14 is a flowchart of a data transmission method in a security tunnel sharing mechanism according to an embodiment of this application;
FIG. 15A (a) and FIG. 15A (b) are diagrams of packet decryption according to an embodiment of this application;
FIG. 15B (a) and FIG. 15B (b) are other diagrams of packet decryption according to an embodiment of this application;
FIG. 16 is a diagram of an example of a message used to modify a security tunnel according to an embodiment of this application; and
FIG. 17 is a diagram of specific interaction of an association relationship between a security tunnel and a service instance according to an embodiment of this application.

### DESCRIPTION OF EMBODIMENTS

The following describes the technical solutions in embodiments of this application with reference to the accompanying drawings in embodiments of this application. In description in embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions in embodiments of this application, "a plurality of" means two or more.

The following terms "first", "second", and the like are merely intended to distinguish between different described objects, and impose no limitation on locations, sequences, priorities, quantities, content, or the like of the described objects. For example, if a described object is a "field", ordinal numbers before "fields" in a "first field" and a "second field" are not intended to limit a location or an order between the "fields". The "first" and the "second" are not intended to limit whether the "fields" modified by the "first" and "second" are in a same message, and the "first" and the "second" are not intended to a sequence of the "first field" and the "second field". For another example, if a described object is a "level", ordinal numbers before "levels" in a "first level" and a "second level" are not intended to limit a priority between the "levels". For another example, a quantity of described objects is not limited by an ordinal number, and may be one or more objects. For example, for a "first device", a quantity of "devices" may be one or more. In addition, objects modified by different prefixes may be the same or different. For example, if a described object is a "device", a "first device" and a "second device" may be a same type of devices, or different types of devices. For another example, if a described object is "information", "first information" and "second information" may be information of a same content or information of different content. In conclusion, in embodiments of this application, use of the prefix words, for example, ordinal numbers, used to distinguish between the described objects constitutes no limitation on the described objects. For descriptions of the described objects, refer to context descriptions in claims or embodiments. Use of the prefix words should not constitute a redundant limitation.

In addition, in embodiments of this application, "connection" may indicate a direct connection or an indirect connection, or may indicate an electrical connection or a communication connection. For example, a connection between two electrical elements A and B may mean that A is directly connected to B, or may mean that A is indirectly connected to B via another electrical element or a connection medium, or may mean that A is indirectly connected to B via another communication device or a communication medium, provided that A and B can communicate with each other.

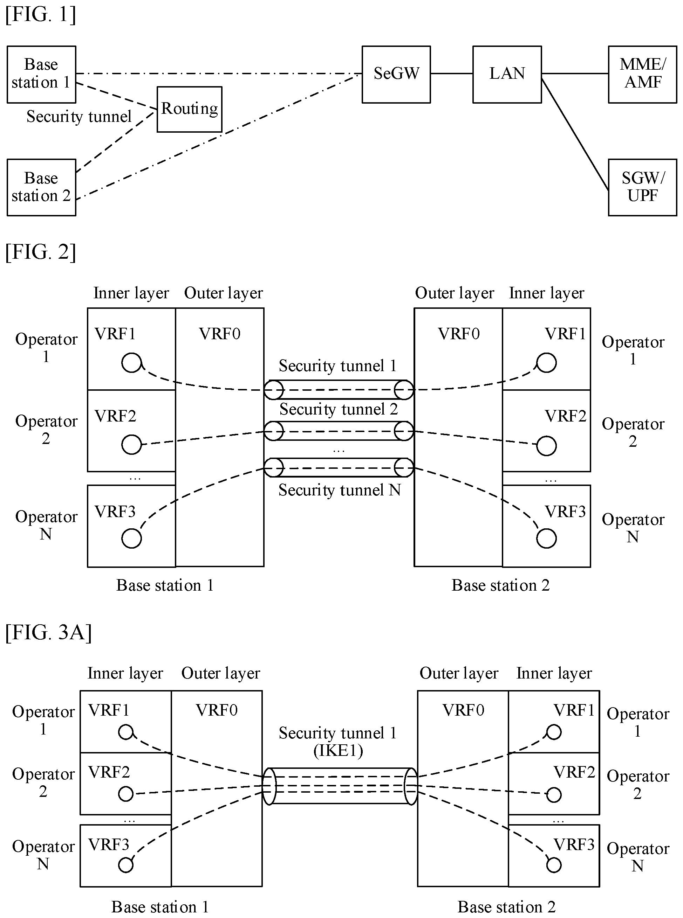

Currently, in an application scenario of a wireless base station, as shown in FIG. 1, secure communication between a base station and a core network may be implemented by establishing a security protocol channel between the base station and a security gateway (security gateway, SeGW), to carry a coordinated service between base stations. The core network may include, as shown in FIG. 1, a local area network (local area network, LAN), an SeGW, a mobility management entity (mobility management entity, MME)/an authentication management function (authentication management function, AMF), a signaling gateway (signaling gateway, SGW)/user plane function (user plane function, UPF), and the like.

As 3GPP supports direct establishment of a security tunnel between base stations, to reduce traffic load on the security gateway and reduce a delay between the base stations, a security tunnel, for example, a direct IPsec tunnel (referred to as an "IPsec tunnel" below), may be directly established between the base stations. As shown in FIG. 1, in addition to the security protocol channel between the base station and the security gateway (SeGW) of the core network, secure transmission between a base station 1 and a base station 2 may alternatively be implemented through a security tunnel between the base station 1 and the base station 2.

In a multi-operator base station scenario, for example, in a scenario in which a base station serves a plurality of operators at the same time, that is, in a RAN sharing scenario in which the plurality of operators share the same base station, because transmission isolation and data isolation are required between the operators, different operators usually use different VRFs, and different VRFs require respective security tunnels. To implement the transmission isolation and the data isolation between the operators, four inter-base station security tunnels need to be established between the base station 1 and the base station 2 at an operator granularity. Similarly, a plurality of security tunnels also need to be established between the base station 1 and another base station, and a plurality of security tunnels also need to be established between the base station 2 and another base station, to meet isolation between different operators.

It is known that IPsec resources are limited. For example, board hardware of the IPsec is limited. In some examples, a child SA specification of an entire board is 512, that is, a base station may have 512 neighboring base stations. Under a conventional inter-base station security tunnel establishment mechanism, if there are four operators in total, and four security tunnels are established between a base station 1 and each of other base stations, a total of 512*4=2048 security tunnels need to be established between the base station 1 and the other base stations. Therefore, the conventional inter-base station security tunnel establishment mechanism results in a problem that an inter-base station security tunnel specification increases sharply. A root cause of this problem is that the security tunnel cannot be shared by all operators as a public channel, resulting in a significant waste of base station resources. In other words, in a case where a quantity of security tunnels supported by the base station is limited, a key to resolving the problem that the security tunnel specification increases sharply is to improve utilization of the security tunnel through security tunnel sharing.

A key to establishing the security tunnel is to negotiate a security parameter used to protect the security tunnel and a security parameter used to protect service data. For example, the security tunnel is an IPSec tunnel. Negotiation of an IKE SA and a child SA is crucial during establishment of the IPSec tunnel. The IKE SA is a security association (security association, SA) negotiated according to an internet key exchange (internet key exchange, IKE) protocol and used for security protection such as encryption of an IKE message. The child SA is an SA negotiated according to the IKE protocol and used for security protection of a specific service. Because the IKE protocol is mainly used in an IPsec scenario, the child SA is sometimes also referred to as an IPsec SA (which is collectively referred to as a "child SA" in the following embodiments). The IKE SA is a group of security parameters used to protect an IPSec tunnel. The child SA is a security parameter used to protect user data. In the foregoing negotiation process, the IKE SA is a basis of the child SA, because establishment of the child SA needs a series of keys obtained after the IKE SA is established.

Currently, mainstream configurations of the IKE SA and the child SA are usually performed according to protocol standards such as RFC 7296 and RFC 4301. These protocols do not support sharing of a security tunnel between base stations, and in a traffic selector involving the child SA in the protocols, only a range of traffic of interest is defined (where for example, a source address range and a destination address range are defined to describe a flow that needs to be encrypted), but other dimensions are not defined, for example, a virtual private network (virtual private network, VPN) granularity. Therefore, to avoid a problem that a plurality of service instances cannot be isolated and distinguished when an address conflict (where the address conflict is a common scenario) occurs in the plurality of service instances, each of different service instances needs to be supported by an independent IKE SA and child SA. In other words, a combination of one IKE SA and one child SA cannot provide multiplexing and sharing for the plurality of service instances, even under an operator. In this case, as shown in FIG. 2, if there are N (where N is a positive integer greater than 1) inner service instances, N local IKE addresses, N IKE SAs, and N child SAs need to be provided between a base station 1 and a base station 2. The service instance may be a virtual routing and forwarding (virtual routing and forwarding, VRF)1, a VRF2, and a VRF3 shown in FIG. 2. In some cases, the service instance is also referred to as a "VRF instance". The VRF is an instance created on a physical device and obtained through logical division on the physical device. Instances are isolated from each other at a routing layer. Based on this, data or services can be isolated. Each VRF has an independent interface, a routing table, a routing protocol process, and the like. In other words, current protocols cannot support sharing of a security tunnel between base stations, either in terms of protocol functions or a specified communication process.

To resolve a problem in a conventional technology that an inter-base station security tunnel specification in a network increases sharply, embodiments of this application provide a method for sharing a security protocol tunnel. In the method, sharing of a plurality of security tunnels between network devices by a plurality of operators may be supported, and the plurality of security tunnels are available for any operator served by a first network device and a second network device. As shown in FIG. 3A, data of any operator between a base station 1 and a base station 2 may be transmitted through a security tunnel 1, where the security tunnel 1 is security-protected through encryption and the like provided by IKE1. In other words, regardless of whether any operator served by the first network device and the second network device has a data transmission requirement, the first network device may complete data transmission through any security tunnel between the first network device and the second network device. Based on this, the problem that the inter-base station security tunnel specification increases sharply can be resolved, resources such as system computing, storage, and IP addresses can be saved, operation and maintenance costs of customers can be reduced, utilization of the security tunnel can be improved, and more reliable and efficient service running can be ensured.

In some embodiments, to resolve a problem in a conventional technology that a security tunnel cannot provide multiplexing and sharing for a plurality of service instances because each of different service instances needs to be supported by using an independent IKE SA and child SA, and consequently, utilization of the security tunnel is still low, in the method for sharing a security protocol tunnel provided in embodiments of this application, one child SA may be further associated with one or more service instances. In this way, a combination of one IKE SA and one child SA can provide multiplexing and sharing for the plurality of service instances. Based on this, a network device does not need to establish an independent IKE SA and child SA for each service instance. Therefore, a quantity of inter-base station security tunnels can be further reduced, resources such as system computing, storage, and IP addresses can be saved, operation and maintenance costs of customers can be reduced, utilization of the security tunnel can be further improved, and more reliable and efficient service running can be ensured.

An RFC 4301 protocol standard is used as an example. Two databases, which are respectively a security policy database (security policy database, SPD) and a security association database (security association database, SAD), are defined in the standard, where the SPD maps to the SAD. The SPD describes which traffic can be encrypted, and the SAD describes how to encrypt a data packet. The SPD and the SAD are in one-to-one correspondence. After a control plane protocol IKE completes negotiation of a correspondence between a service instance and a security tunnel, one SPD and one SAD are added to the security tunnel, and the SPD and the SAD are mapped to each other. In this way, after the control plane protocol completes negotiation of a correspondence between a plurality of service instances and the security tunnel, mapping relationships between a plurality of SPD entries and one SAD entry are obtained.

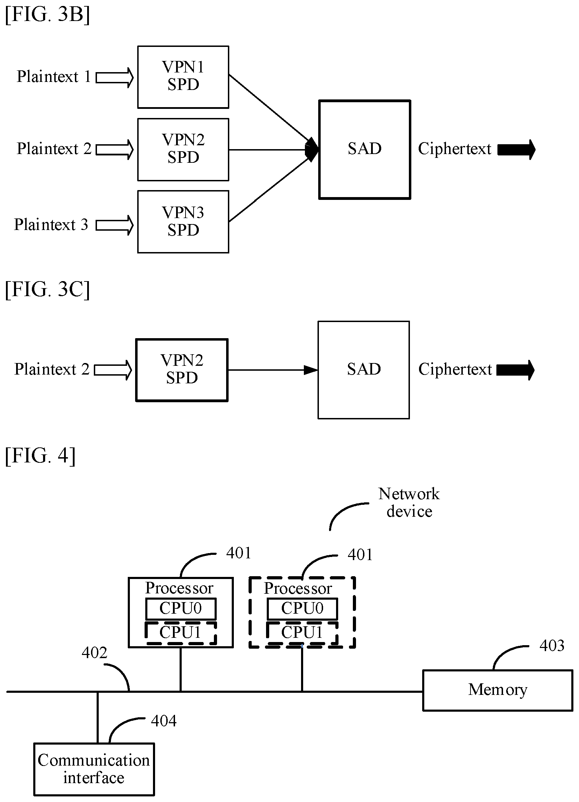

Based on this, a core of embodiments of this application is that a plurality of service instances share one child SA. Because each service instance has a complete and independent address and routing space (where for example, space isolation is implemented through a VRF), the SPD needs to belong to a VPN level, and the SAD needs to belong to a system (system) level. From a perspective of a system, as shown in FIG. 3B, SPD entries (in FIG. 3B, a VPN1 SPD, a VPN2 SPD, and a VPN3 SPD are used as examples) respectively corresponding to service instances of a plurality of pieces of service data (in FIG. 3B, plaintext 1, plaintext 2, and plaintext 3 are used as examples) can be mapped to one SAD entry of the system. From a perspective of a VPN instance, as shown in FIG. 3C, an SPD (in FIG. 3C, a VPN2 SPD is used as an example) entry corresponding to a service instance of a piece of service data (in FIG. 3C, plaintext 2 is used as an example) can be mapped to one SAD entry of a system.

It should be noted that, in some scenarios, the service instance may also be a VPN instance.

The network device in embodiments of this application may be the base station in the foregoing example, for example, a macro base station, a micro base station (also referred to as a "small cell"), or a distributed unit-control unit (distributed unit-control unit, DU-CU). The DU-CU is a device that is deployed in a radio access network and that can perform wireless communication with a terminal device. In addition, the base station may alternatively be a radio controller in a cloud radio access network (cloud radio access network, CRAN) scenario, a relay station, an access point, a vehicle-mounted device, a wearable device, a network device in a future evolved public land mobile network (public land mobile network, PLMN), or the like.

In some examples, the base station may be an Ng-eNB, a gNB, or a transmission reception point (transmission reception point, TRP). Alternatively, the base station may be a base station defined in the 3rd generation partnership project (3rd generation partnership project, 3GPP), for example, an eNB or an e-NodeB.

In addition, when the eNB accesses an NR core network, a next generation core (next generation core, NGC), or a 5G core network (5th generation core network, 5GC), the eNB may also be referred to as an eLTE eNB. Specifically, the eLTE eNB is an LTE base station device evolved based on the eNB, and may be directly connected to the 5G CN. The eLTE eNB also belongs to a base station device in NR.

In some examples, the network device in embodiments of this application may further include a network device of another type, function, and structure, for example, a wireless terminal (wireless terminal, WT), an access point (access point, AP), or an access controller (access controller, AC), or another network device that has a capability of communicating with a terminal device and a core network. This is not specifically limited in embodiments of this application.

FIG. 4 is a diagram of a hardware structure of a network device. As shown in FIG. 4, the network device may include a processor 401, a communication line 402, a memory 403, and at least one communication interface (where that the network device includes a communication interface 404 is merely used as an example for description in FIG. 4).

The processor 401 may be a general-purpose central processing unit (central processing unit, CPU), a microprocessor, an application-specific integrated circuit (application-specific integrated circuit, ASIC), or one or more integrated circuits configured to control program execution of the solutions in this application.

The communication line 402 may include a path on which information is transferred between the foregoing components.

The communication interface 404 uses any apparatus such as a transceiver, and is configured to communicate with another device or a communication network, for example, an ethernet, a RAN, or a WLAN.

In this embodiment of this application, the communication line 402 and the communication interface 404 may be configured to support establishment/modification/deletion of a security tunnel between the network device and another network device (for example, a first network device and a second network device), negotiation (for example, adding/deleting/updating a key) of an association relationship between the security tunnel and a service instance, transmission of service data, and the like.

The memory 403 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, this is not limited thereto. The memory may exist independently and be connected to the processor through the communication line 402. The memory may alternatively be integrated with the processor.

The memory 403 is configured to store computer-executable instructions for performing the solutions in this application. The memory 403 can store instructions for implementing two modular functions: a sending instruction, a receiving instruction, and a processing instruction, and the processor 401 controls execution of the instructions. The processor 401 is configured to execute the computer-executable instructions stored in the memory 403, to implement methods provided in the following embodiments of this application. The memory 403 shown in FIG. 4 is merely illustrative, and the memory may also include other functional instructions. This is not limited in the present invention.

Optionally, the computer-executable instructions in this application may also be referred to as application program code. This is not specifically limited in this application.

During specific implementation, in an embodiment, the processor 401 may include one or more CPUs, for example, a CPU0 and a CPU1 in FIG. 4.

It should be noted that FIG. 4 is merely used as an example of the network device, and a specific structure of the network device is not limited. For example, the network device may further include another functional module.

With reference to the accompanying drawings, the following specifically describes a method for sharing a security protocol tunnel provided in embodiments of this application.

In a possible implementation, when establishing a security tunnel, a network device may associate the security tunnel with one or more service instances, so that one security tunnel can provide multiplexing and sharing for a plurality of service instances.

For example, in a possible implementation, when establishing a child SA, that is, when performing child SA negotiation, the network device may associate one child SA with a plurality of service instances, so that a combination of one IKE SA and one child SA can provide multiplexing and sharing for the plurality of service instances. Based on this, during transmission of data corresponding to the plurality of service instances, the same combination of the child SA and the IKE SA may be used. In addition, to accurately distinguish data of a same IP address of different service instances, after completing IPsec processing on the data, the network device may further include service instance information in a packet obtained through IPsec processing, so that a peer network device can identify a service instance to which the data belongs.

Certainly, a quantity of service instances corresponding to one child SA is not limited in embodiments of this application. For example, one child SA may alternatively be associated with one service instance, but for child SAs associated with different service instances, a same IKE SA may be used. Based on this, during transmission of data corresponding to different service instances, different child SAs may be used, but a same IKE SA is used. For example, during IPsec processing, the network device may use a plurality of corresponding child SAs to respectively transmit a plurality of pieces of data, and the peer network device may identify, based on serial peripheral interface (serial peripheral interface, SPI) value fields of SAs in a packet through a conventional IPsec processing procedure, service instances to which the data belongs.

Based on the foregoing implementation, the network device does not need to establish an independent IKE SA and child SA for each service instance. Therefore, a quantity of inter-base station security tunnels can be further reduced, resources such as system computing, storage, and IP addresses can be saved, operation and maintenance costs of customers can be reduced, utilization of the security tunnel can be further improved, and more reliable and efficient service running can be ensured.

Different network devices have different capabilities of service instance negotiation. For example, some network devices have a capability of associating a service instance with a security protocol tunnel, but some network devices do not have the capability of associating a service instance with a security protocol tunnel. When one party does not support the capability of associating a service instance with a security protocol tunnel, a receiver may cause a processing error when another party that supports the capability of associating a service instance with a security protocol tunnel sends service instance negotiation information to the party that does not support the capability of associating a service instance with a security protocol tunnel. To avoid such a problem, in some embodiments, capability negotiation may be performed in advance between network devices (for example, between a first network device and a second network device), so that both parties can know whether each other has the capability of associating a service instance with a security protocol tunnel.

For example, the first network device may send, to the second network device, a packet indicating that the first network device has the capability of associating a service instance with a security protocol tunnel, and when receiving, from the second network device, a packet indicating that the second network device has the capability of associating a service instance with a security protocol tunnel, negotiate, with the second network device, a service instance corresponding to a security tunnel.

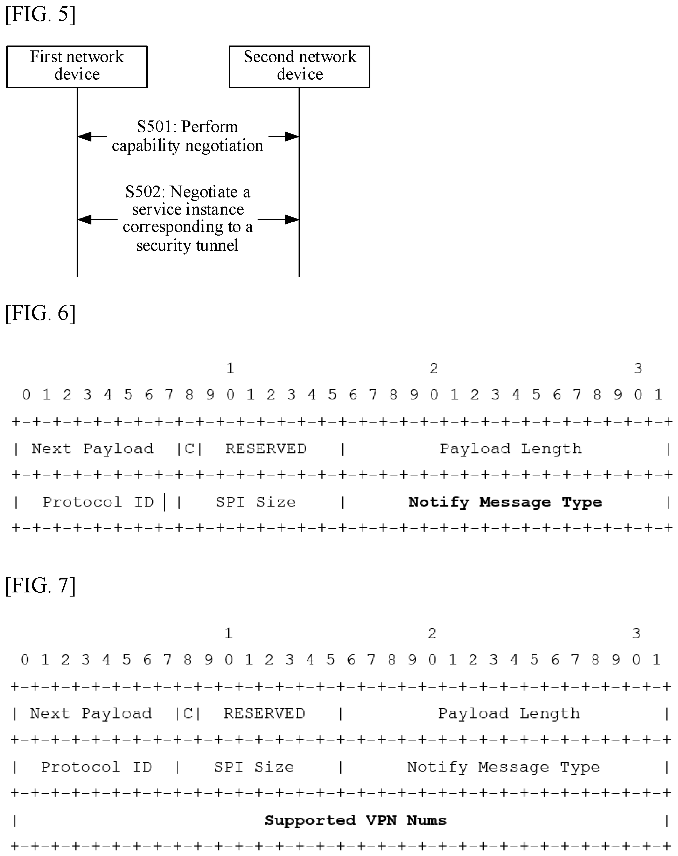

For example, FIG. 5 is a diagram of a process of data transmission between network devices according to an embodiment of this application. As shown in FIG. 5, a first network device and a second network device may complete capability negotiation based on a process provided in S501, and associate, based on a process provided in S502, one or more security tunnels between the network devices with a service instance.

S501: The first network device and the second network device perform capability negotiation.

In some embodiments, the first network device and the second network device may perform capability negotiation independently before creating a child SA, so that the two parties can learn whether each other has a capability of associating a service instance with a security protocol tunnel.

The first network device and the second network device may perform capability negotiation via, but not limited to, any one of the following messages: an IKE_SA_INIT message, an IKE_AUTH message, a CREATE_CHILD_SA message, and an INFORMATIONAL message.

In an example, the first network device and the second network device may perform capability negotiation in an IKE_SA_INIT exchange phase. For example, a party that has the capability of associating a service instance with a security protocol tunnel may notify, by including an added NOTIFY payload in an IKE_SA_INIT message, the peer end of the capability of associating a service instance with a security protocol tunnel. If a receiver also has the capability of associating a service instance with a security protocol tunnel, the NOTIFY payload may also be carried in a response message. Based on this, a transmit end may include service instance negotiation information during subsequent negotiation for creating the child SA. If the receiver does not have the capability of associating a service instance with a security protocol tunnel, the receiver may ignore the NOTIFY payload and does not include the NOTIFY payload in the response message, or return a response like NO_PROPOSAL_CHOSEN or another error response. Based on this, the transmit end does not include the service instance negotiation information during subsequent negotiation for creating the child SA.

For example, the first network device has the capability of associating a service instance with a security protocol tunnel. An IKE_SA_INIT message sent by the first network device to the second network device may be shown as follows:

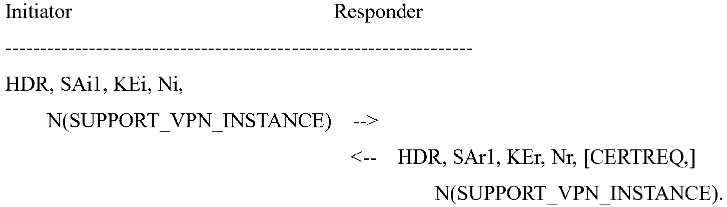

In this example, SUPPORT_VPN_INSTANCE may represent that a local end has the capability of associating a service instance with a security protocol tunnel.

For example, the second network device does not have the capability of associating a service instance with a security protocol tunnel. An IKE_SA_INIT message returned by the second network device to the first network device may be shown as follows:

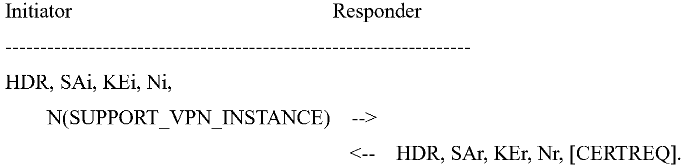

In this example, the second network device does not have the capability of associating a service instance with a security protocol tunnel. Therefore, a response message returned by the second network device to the first network device does not carry a NOTIFY payload of a SUPPORT_VPN_INSTANCE type. Based on this, the first network device may learn, based on the response message that does not carry the NOTIFY payload of the SUPPORT_VPN_INSTANCE type, that the second network device does not have the capability of associating a service instance with a security protocol tunnel, and may choose not to create an IKE SA and notify the second network device of termination of the session, or continue to create the IKE SA and omit the service instance negotiation information during subsequent negotiation for creating the child SA.

For example, when the IKE SA is initially established, the first network device and the second network device may negotiate an algorithm, exchange a key material, and transfer a NOTIFY payload via the IKE_SA_INIT message. The NOTIFY payload may carry some additional information, for example, information representing whether a local end has the capability of associating a service instance with a security protocol tunnel.

In an example, for the NOTIFY payload carrying the information representing whether the local end has the capability of associating a security protocol tunnel with a service instance, refer to Notify Message Type shown in FIG. 6. When the Notify Message Type field is SUPPORT_VPN_INSTANCE, it may represent that the local end has the capability of associating a service instance with a security protocol tunnel, and a value X of SUPPORT_VPN_INSTANCE may be any available value that is not occupied in an IKEv2 NOTIFY standard range value, for example, 16444. A receive end may determine, based on a specific value of the Notify Message Type field, whether a transmit end has the capability of associating a service instance with a security protocol tunnel.

Certainly, in some embodiments, the receive end may alternatively determine, based on whether the NOTIFY payload includes the Notify Message Type field, whether the transmit end has the capability of associating a service instance with a security protocol tunnel. For example, if the NOTIFY payload includes the Notify Message Type field, the receive end may consider that the transmit end has the capability of associating a service instance with a security protocol tunnel; or if the NOTIFY payload does not include the Notify Message Type field, the receive end may consider that the transmit end does not have the capability of associating a service instance with a security protocol tunnel.

In an example, the NOTIFY payload may further carry Supported VPN Nums shown in FIG. 7, which represents a quantity of to-be-associated service instances supported by one child SA, that is, a maximum quantity of supported service instances. In an example, Supported VPN Nums shown in FIG. 7 may be an optional field with a length of four bytes. In an example, if the local end does not limit the quantity, values of Supported VPN Nums may be all 0s or all Fs, or the field is not carried. This is not specifically limited.

In an example, the first network device and the second network device may perform capability negotiation in an IKE_AUTH phase or a CREATE_CHILD_SA phase. For example, a party that has the capability of associating a service instance with a security protocol tunnel may notify, by including an added NOTIFY payload in an IKE_AUTH or CREATE_CHILD_SA message, a peer end of the capability of associating a service instance with a security protocol tunnel. If a receiver also has the capability of associating a service instance with a security protocol tunnel, the NOTIFY payload may also be carried in a response message. Based on this, a transmit end may include service instance negotiation information during subsequent negotiation for creating the child SA. If the receiver does not have the capability of associating a service instance with a security protocol tunnel, the receiver may ignore the NOTIFY payload and omit the NOTIFY payload in the response message, or return a response like NO_PROPOSAL_CHOSEN or another error response. Based on this, the transmit end does not include the service instance negotiation information during subsequent negotiation for creating the child SA.

For related descriptions of a process in which the first network device and the second network device perform capability negotiation via the IKE_AUTH message in the IKE_AUTH phase, via the CREATE_CHILD_SA message in the CREATE_CHILD_SA phase, or via an INFORMATIONAL message, and a NOTIFY payload for informing the peer end that a local end has the capability of associating a service instance with a security protocol tunnel, refer to the foregoing related descriptions of the capability negotiation performed by the first network device and the second network device in the IKE_SA_INIT exchange phase. Details are not described herein again.

Certainly, explicit capability negotiation may not be performed between network devices (for example, between the first network device and the second network device). For example, in some embodiments, when either the first network device or the second network device does not have the capability of associating a service instance with a security protocol tunnel, the device may notify, by returning a NOTIFY payload of a TS_UNACCEPTABLE type or another error response, the other end that the device does not have the capability of associating a service instance with a security protocol tunnel. This manner is also referred to as implicit capability negotiation. Based on this, the other end device may create the child SA in a conventional manner. A specific occasion and a specific manner of performing capability negotiation by the network devices are not specifically limited in this application.

For example, in the CREATE_CHILD_SA message, a traffic selector of a TS_VPNV4_ADDR_RANGE type is used to create the child SA. When the second network device does not have the capability of associating a service instance with a security protocol tunnel, a message returned by the second network device may be shown as follows:

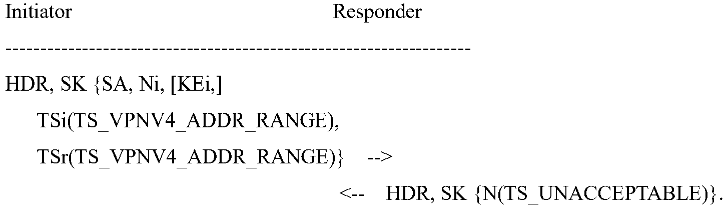

In this example, the second network device notifies, by including a NOTIFY payload of a TS_UNACCEPTABLE type in the CREATE_CHILD_SA message, the first network device that the second network device does not have the capability of associating a service instance with a security protocol tunnel. Based on this, the first network device may learn that the second network device does not have the capability of associating a service instance with a security protocol tunnel, and may not include the service instance negotiation information during subsequent negotiation for creating the child SA.

After S501 is completed, if both the first network device and the second network device have the capability of associating a service instance with a security protocol tunnel, S502 continues to be performed.

S502: The first network device and the second network device negotiate the service instance corresponding to the security tunnel.

In some embodiments, the first network device may include service instance negotiation information in a packet that is sent to the second network device and that indicates to establish the security tunnel between the first network device and the second network device, for example, include a service instance of the first network device, and after receiving a response packet from the second network device, complete the establishment of the security tunnel based on the response packet, and associate the established security tunnel with the service instance of the first network device and a service instance of the second network device (for example, a service instance indicated by the response packet). The service instance indicated by the response packet is determined by the second network device based on the service instance negotiation information.

In some examples, the first network device and the second network device may determine, through negotiation according to the internet key exchange version 2 (internet key exchange version 2, IKEv2) protocol, a service instance corresponding to any security tunnel in one or more security tunnels. For example, the first network device and the second network device may include the service instance negotiation information in any one or more of the following messages, to determine, through negotiation, the service instance corresponding to the security tunnel: an IKE_AUTH message and a CREATE_CHILD_SA message.

The IKE_AUTH message may be used for negotiation to create a first child SA, and the CREATE_CHILD_SA message may be used for negotiation to create a second child SA and a subsequent child SA. For example, during creation of a child SA, the first network device and the second network device may negotiate, based on an IP address, a protocol, and a port, which traffic at two ends of IPsec may use the child SA.

In some embodiments, the first network device and the second network device may include the service instance negotiation information in the IKE_AUTH message, to determine, through negotiation, the service instance corresponding to the security tunnel. In other words, the first network device and the second network device may alternatively negotiate, via the IKE_AUTH message, which service instances' traffic at two ends of IPsec may use the child SA.

The IKE_AUTH message may carry the service instance negotiation information via any one or more of the following fields: an extension field (for example, an extension header), a special field, a reserved field, an IP address field, and a TTL field.

In an example, the first network device and the second network device may define a new traffic selector (traffic selector, TS) payload in the IKE_AUTH message, for example, include the service instance negotiation information by extending a traffic selector. The service instance negotiation information in the traffic selector may be in any form, including but not limited to a number or a character string. This is not specifically limited. In addition, the traffic selector may include only the service instance negotiation information, or may include both the service instance negotiation information and other information (such as an IP address, a protocol, and a port).

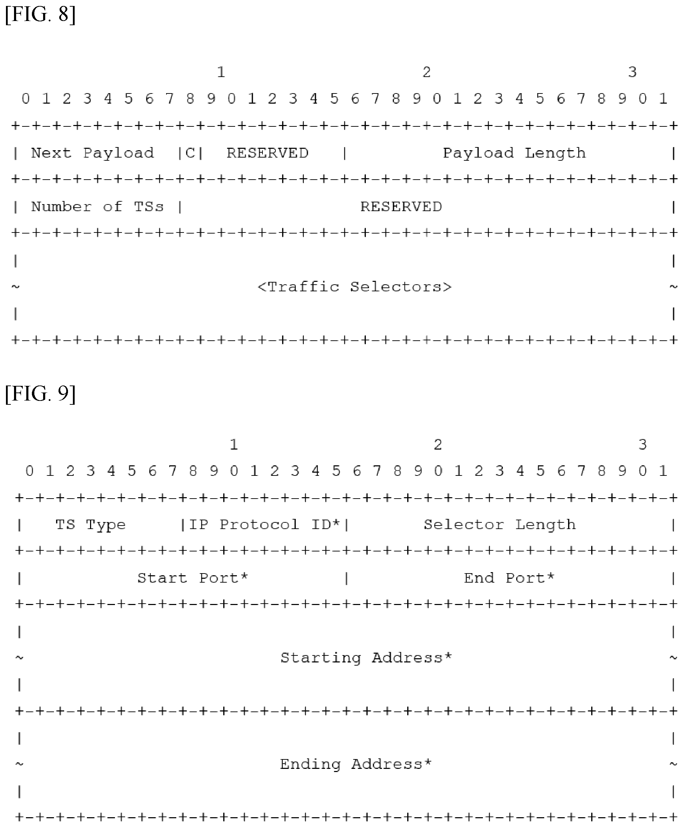

As shown in FIG. 8, a TS payload may include a plurality of traffic selectors, and information in the traffic selector may indicate, to an IPsec peer, which traffic needs to undergo IPsec processing. In an example, a conventional traffic selector whose TS type is TS_IPV4_ADDR_RANGE (with a value of 7) and a conventional traffic selector whose TS type is TS_IPV6_ADDR_RANGE (with a value of 8) may be shown in FIG. 9.

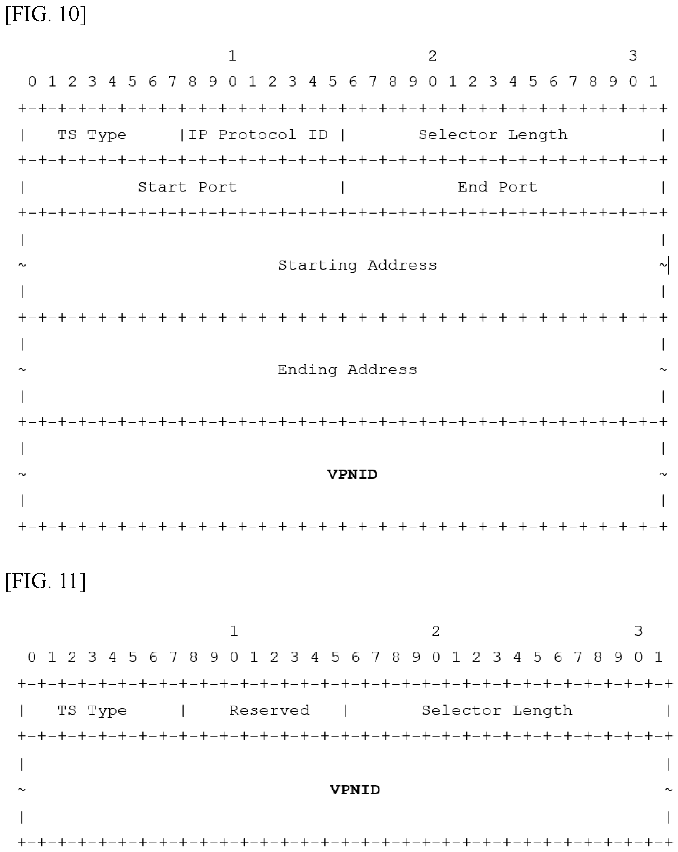

In an example, a traffic selector carrying the service instance negotiation information may be shown in FIG. 10. In a traffic selector in a format shown in FIG. 10, a TS type is TS_VPNV4_ADDR_RANGE or TS_VPNV6_ADDR_RANGE. The traffic selector is different from the traffic selector whose TS type is TS_IPV4_ADDR_RANGE and the traffic selector whose TS type is TS_IPV6_ADDR_RANGE shown in FIG. 9, and a VPN ID field is added, where the VPN ID field is used to carry the service instance negotiation information. In an example, the VPN ID field may be identification information (for example, an ID) of a service instance.

In an example, the traffic selector carrying the service instance negotiation information may alternatively be shown in FIG. 11. In a traffic selector in a format shown in FIG. 11, a TS type is TS_VPN. The traffic selector is different from the traffic selector whose TS type is TS_IPV4_ADDR_RANGE and the traffic selector whose TS type is TS_IPV6_ADDR_RANGE shown in FIG. 9, and a VPN ID field is added, where the VPN ID field is used to carry the service instance negotiation information. In an example, the VPN ID field may be identification information (for example, an ID) of a service instance.

In some embodiments, the first network device and the second network device may include the service instance negotiation information in the CREATE_CHILD_SA message, to determine, through negotiation, the service instance corresponding to the security tunnel. In other words, the first network device and the second network device may alternatively negotiate, via the CREATE_CHILD_SA message, which service instances' traffic at two ends of IPsec may use the child SA.

In an example, the CREATE_CHILD_SA message carries the service instance negotiation information by using a traffic selector of a TS_VPNV4_ADDR_RANGE type. The message may be shown as follows:

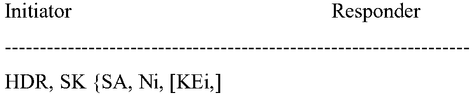

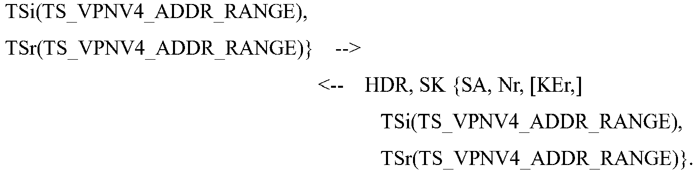

In the foregoing message exchange example, TSi represents Traffic Selector-initiator, TSr represents Traffic Selector-responder, and both TSi and TSr are expressions agreed in RFC 7296 of the IKEv2 protocol, where TSi represents traffic sent from or received by an initiator (transmit end), and TSr represents traffic received by or sent from a responder (receive end).

For example, two operators share a base station 1 and a base station 2. It is assumed that the operator 1 uses a VRF1 as a service instance and a corresponding VPN ID is 1, the operator 2 uses a VRF2 as a service instance and a corresponding VPN ID is 2, and the operator 1 and operator 2 use a same IP address range. For example, an address range used on the base station 1 side is 10.1.1.0 to 10.1.1.255, and an address range used on the base station 2 side is 11.1.1.0 to 11.1.1.255. The base station 1 (Initiator) and the base station 2 (Responder) may associate, via the following message, a child SA with a service instance according to the IKEv2 protocol when negotiating for creating the child SA in a CREATE_CHILD_SA procedure:

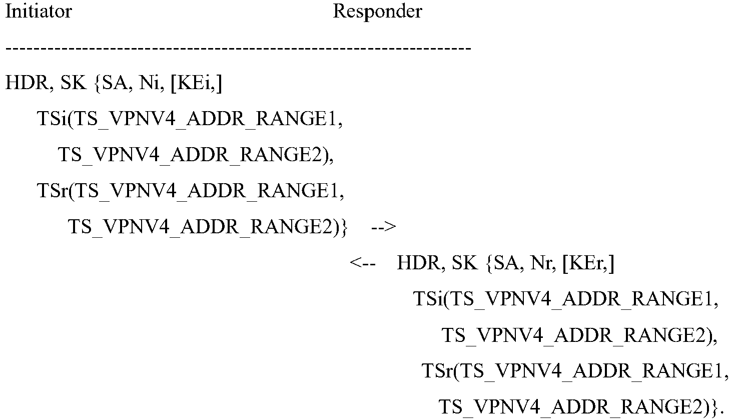

For example, a TS payload in this example is specifically shown as follows:

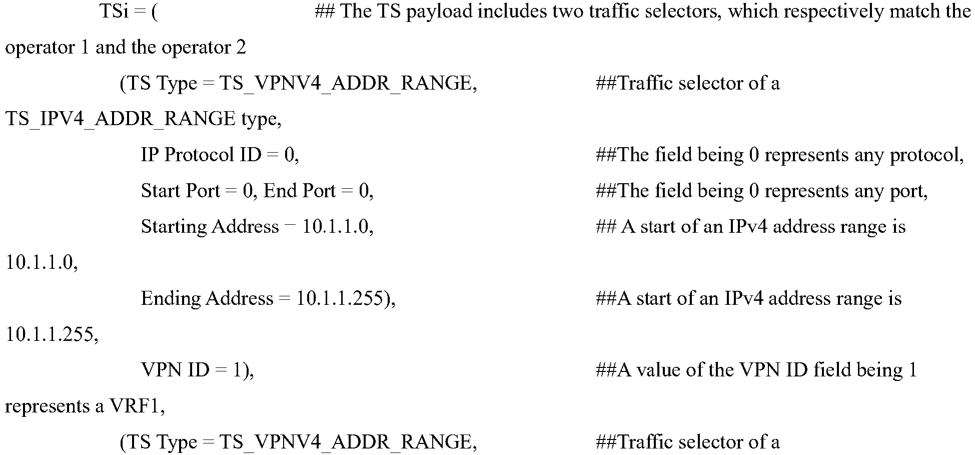

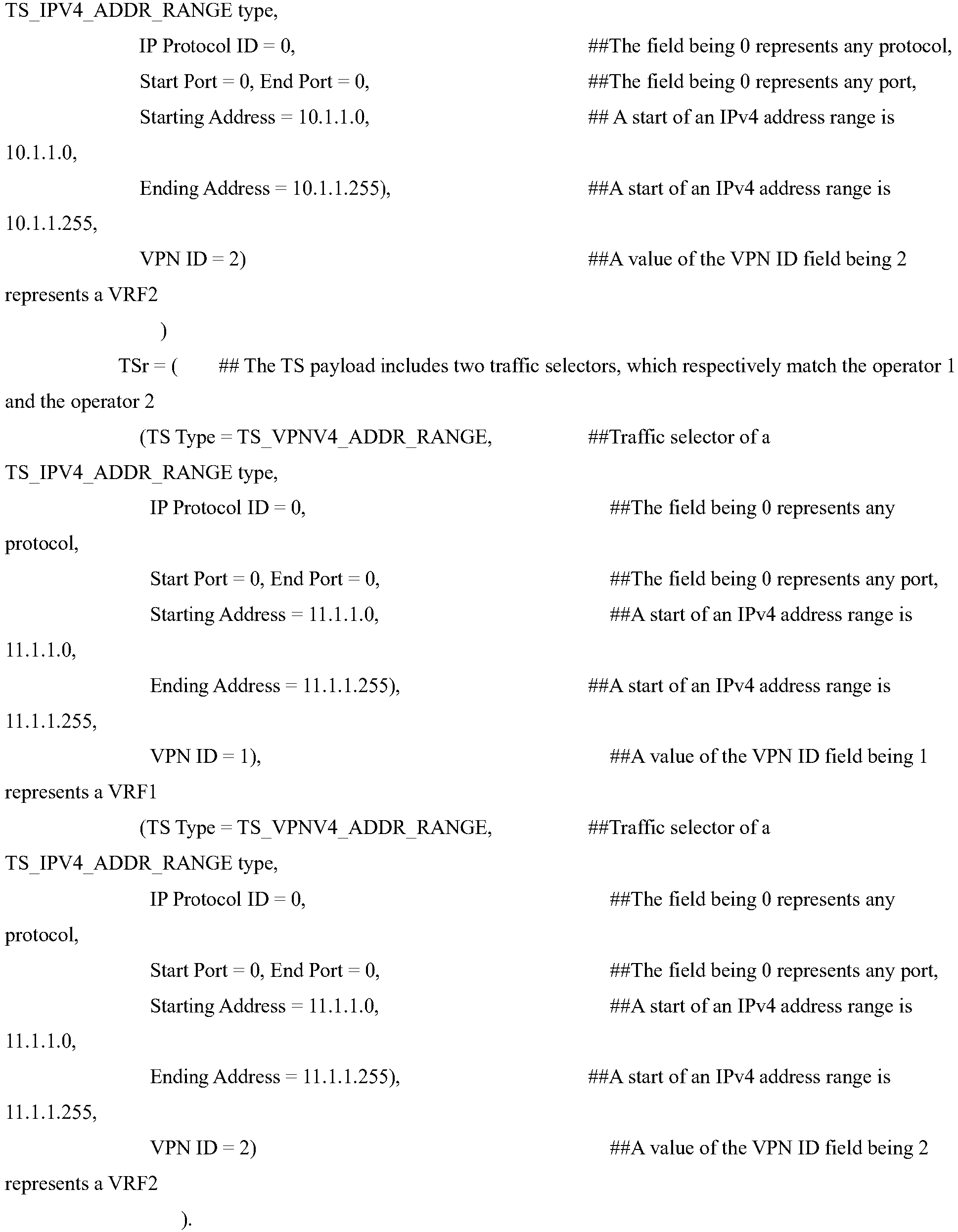

In the example of the TS payload, two traffic selectors of the TS_VPNV4_ADDR_RANGE type are used. One traffic selector indicates that traffic that belongs to a VPN instance "VRF1", sent from the initiator to the responder, and with a source IPv4 address range of "10.1.1.0 to 10.1.1.255" and a destination IPv4 address range of "11.1.1.0 to 11.1.1.255", and traffic that belongs to the VPN instance "VRF1", sent from the responder to the initiator, and with a source IPv4 address range of "11.1.1.0 to 11.1.1.255" and a destination IPv4 address range of "10.1.1.0 to 10.1.1.255" are traffic of interest. The other traffic selector indicates that traffic that belongs to a VPN instance "VRF2", sent from the initiator to the responder, and with a source IPv4 address range of "10.1.1.0 to 10.1.1.255" and a destination IPv4 address range of "11.1.1.0 to 11.1.1.255", and traffic that belongs to the VPN instance "VRF1", sent from the responder to the initiator, and with a source IPv4 address range of "11.1.1.0 to 11.1.1.255" and a destination IPv4 address range of "10.1.1.0 to 10.1.1.255" are traffic of interest. The foregoing traffic of interest needs to use the child SA.

In some embodiments, the first network device and the second network device may include the service instance negotiation information in an added NOTIFY payload (Payload), to determine, through negotiation, the service instance corresponding to the security tunnel. In other words, the first network device and the second network device may alternatively negotiate, via the added NOTIFY payload, which service instances' traffic at two ends of IPsec may use the child SA. The service instance negotiation information in the NOTIFY payload may be in any form, including but is not limited to a number or a character string. This is not specifically limited. In addition, the NOTIFY payload may carry the service instance negotiation information alone, or may carry both the service instance negotiation information and other information (such as an IP address, a protocol, and a port).

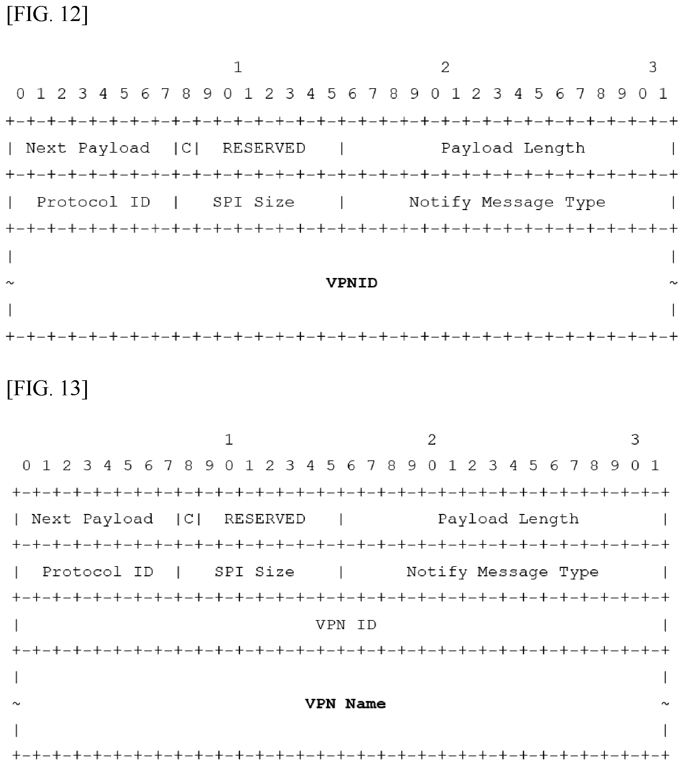

In an example, a NOTIFY payload carrying the service instance negotiation information may be shown in FIG. 12. In a NOTIFY payload in a format shown in FIG. 12, a Notify Message Type field is VPN_BINDING, and a value Q of VPN_BINDING may be any available value that is not occupied in a IKEv2 NOTIFY standard range value, for example, 16448. In addition, a VPN ID field is added to the NOTIFY payload in the format shown in FIG. 12, where the VPN ID field is used to carry the service instance negotiation information. In an example, the VPN ID field may be identification information (for example, an ID) of a service instance.

For example, the NOTIFY payload of a VPN_BINDING type is carried in the CREATE_CHILD_SA message. A message that carries the service instance negotiation information, indicates a to-be-created child SA, and is associated with some service instances specified in the NOTIFY payload may be shown as follows:

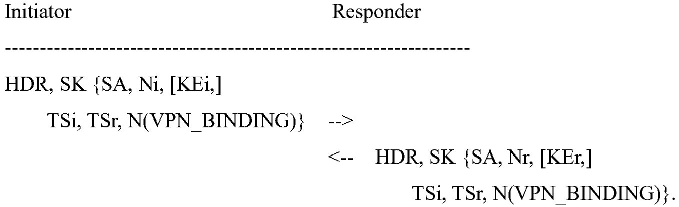

It may be understood that a VPN is a single-node concept. Generally, a VPN name in a character string format is created for a VPN when the VPN is created on a device, and the VPN name is used as an identifier of the VPN in the device. However, in embodiments of this application, an IPsec SA is used through negotiation based on a service instance, and an IPsec packet needs to carry service instance information. Therefore, mapping between the service instance and a value of an VPN ID needs to be completed between a plurality of devices. In some embodiments, to ensure consistency of mapping between the service instance and the VPN ID, the mapping between the service instance and the VPN ID may be performed through configuration or interaction between devices.

In an example, an administrator can configure mapping between a specified service instance and a VPN ID on different network devices, to ensure that the network devices have same mapping.

For example, the mapping between the service instance and the VPN ID may be created based on a VPN name, as illustrated in the following example:
[device1] vpn <vpn-name>.

In this example, the <vpn-name> field is a service name that the administrator needs to enter.

For another example, a VPN ID corresponding to a VPN may be specified during creation of the VPN, as illustrated in the following example:
[device1] vpn <vpn-name> <vpn-id>.

In this example, <vpn-name> is a service name that the administrator needs to enter, the <vpn-id> field is a VPN ID corresponding to <vpn-name>, and the <vpn-id> field may be a value in an integer format. Based on this, the administrator can specify a same VPN ID for VPNs having a same VPN name on different network devices.

For example, the administrator can run the following commands to create two VPNs on each of device1 and device2. A VPN ID of a VPN named "VRF1" is 1 on both the devices, and a VPN ID of a VPN named "VRF2" is 2 on both the devices.
[device1] vpn VRF1 1;
[device1] vpn VRF2 2;
[device2] vpn VRF1 1;
[device2] vpn VRF2 2.

In another example, network devices may interact with each other according to the IKEv2 protocol, and negotiation or notification about the mapping between the service instance and the VPN ID is added.

For example, the NOTIFY payload carrying the service instance negotiation information may further carry an added VPN_ID_MAPPING type. The VPN_ID_MAPPING type is used to notify the peer end that the message includes a mapping relationship between a name (VPN Name) and an ID of the service instance. For example, a NOTIFY payload carrying the VPN_ID_MAPPING type may be shown in FIG. 13. When a Notify Message Type field shown in FIG. 13 is VPN_ID_MAPPING, it may represent that the message includes the mapping relationship between the name (VPN Name) and the ID of the service instance. A value G of VPN_ID_MAPPING may be any available value in an IKEv2 NOTIFY range value defined by the IANA organization, for example, 16453. A VPN ID field shown in FIG. 13 is used to carry the service instance negotiation information. For example, the VPN ID field may be identification information (for example, an ID) of the service instance, and a VPN Name field indicates a name of the service instance.

For example, the first network device and the second network device notify the peer end of a mapping relationship between a name (VPN Name) and an ID of a service instance of the local end via the IKE_SA_INIT message. The IKE_SA_INIT message may be shown as follows:

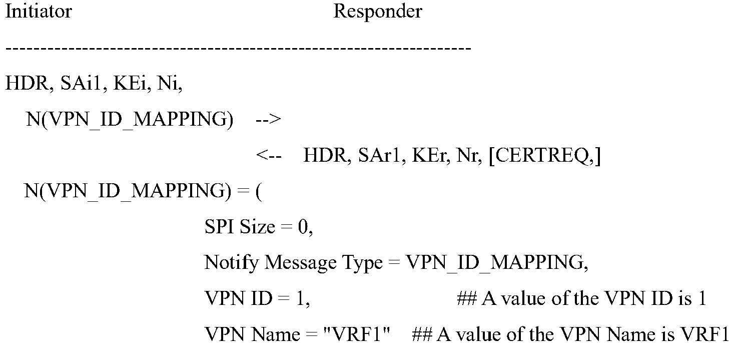

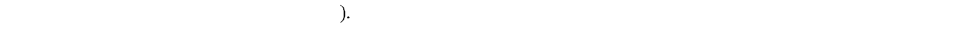

In some examples of this application, one security tunnel may correspond to a plurality of service instances. For example, one child SA may be associated with a plurality of service instances through negotiation, and a combination of one child SA and one IKE SA may provide services for a plurality of service instances. Based on this example, a quantity of SAs may be minimized. Therefore, the quantity of SAs may be reduced to a maximum extent, resources such as system computing/storage/IP addresses may be saved, operation and maintenance costs of customers may be reduced, and utilization of the SA may be improved.

Certainly, in some other examples of this application, one security tunnel may alternatively correspond to only one service instance. For example, one child SA may be associated with one service instance through negotiation, one child SA may provide a service for one service instance, and a plurality of child SAs that provide services for a plurality of different service instances may share one IKE SA. In this way, although a quantity of SAs cannot be minimized, a quantity of IKE SAs may be reduced (for example, reduced to 1). Therefore, the quantity of SAs can still be reduced to some extent, resources such as system computing/storage/IP addresses can still be saved, operation and maintenance costs of customers can still be reduced, and utilization of the SA can still be improved. In addition, in this example, the network device does not need to modify an IPsec data plane, but can directly reuse a conventional IPsec protocol procedure and format.

For example, if an operator 1 uses a VRF1 as a service instance and a corresponding VPN ID is 1, an address range used by the operator 1 on a base station 1 side is 10.1.1.0 to 10.1.1.255, and an address range used by the operator 1 on a base station 2 side is 11.1.1.0 to 11.1.1.255. A device 1 (Initiator) and a device 2 (Responder) may associate, via the following messages, a child SA with a service instance according to the IKEv2 protocol when negotiating for creating the child SA in a CREATE_CHILD_SA procedure:

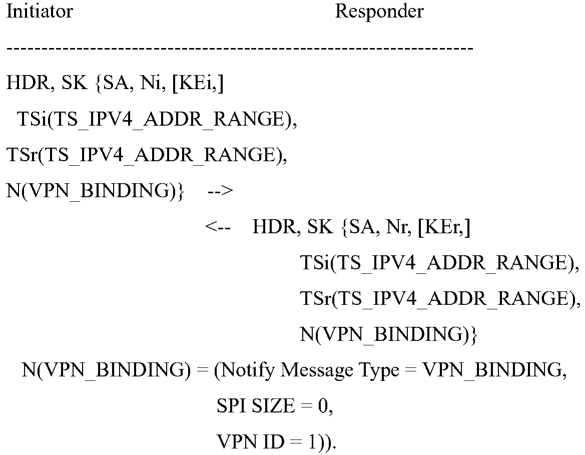

In this example, a value of the VPN ID field being 1 represents a "VRF1", that is, the child SA may be associated with a service instance VRF1 based on the message.

It may be understood that, based on the foregoing capability negotiation process provided in this embodiment of this application, network devices may learn of a capability of each other, for example, whether the network devices have the capability of associating a service instance with a security protocol tunnel, so that the two parties may determine, based on the capability of each other, whether to subsequently negotiate a service instance corresponding to a security tunnel. Based on this, the following problem can be avoided: when one party (for example, the second network device) does not have the capability of associating a service instance with a security protocol tunnel, a receiver may cause a processing error when the other party (for example, the first network device) that has the capability of associating a service instance with a security protocol tunnel sends service instance negotiation information to the second network device.

In addition, when both the network devices have the capability of associating a service instance with a security protocol tunnel, based on the foregoing service instance negotiation process provided in this embodiment of this application, a plurality of operators are supported to share a same security tunnel between the network devices. For example, a same security tunnel is available for any operator served by the first network device and the second network device. In other words, regardless of whether any operator served by the first network device and the second network device has a data transmission requirement, the first network device may complete data transmission through any security tunnel between the first network device and the second network device. In addition, an association relationship between a security tunnel and a service instance may be established between the network devices to implement service isolation in a case of hardware resource sharing. This not only resolves the problem that the inter-base station security tunnel specification increases sharply, saves resources such as system computing, storage, and IP addresses, reduces operation and maintenance costs of customers, and improves utilization of the security tunnel, but also facilitates security tunnel selection and smooth identification and parsing of a receive end during subsequent data transmission between the network devices, and ensures more reliable and efficient service running.

Based on the service instance negotiation process between the network devices provided in the foregoing embodiment of this application, when there is a requirement for data transmission between the network devices, the network devices may perform IPsec processing on traffic of different service instances based on the child SA. In a conventional technology, because SPIs of different child SAs are completely different, a packet may be encapsulated only by relying on the SPI. However, in embodiments of this application, because a plurality of service instances may reuse a same child SA, but different service instances have different policies, an identifier needs to be added to the packet to identify a service instance, so that a data plane can distinguish a service instance to which a packet (for example, an encapsulating security payload protocol (encapsulating security payload protocol, ESP) packet or an authentication header protocol (authentication header protocol, AH) packet) belongs.

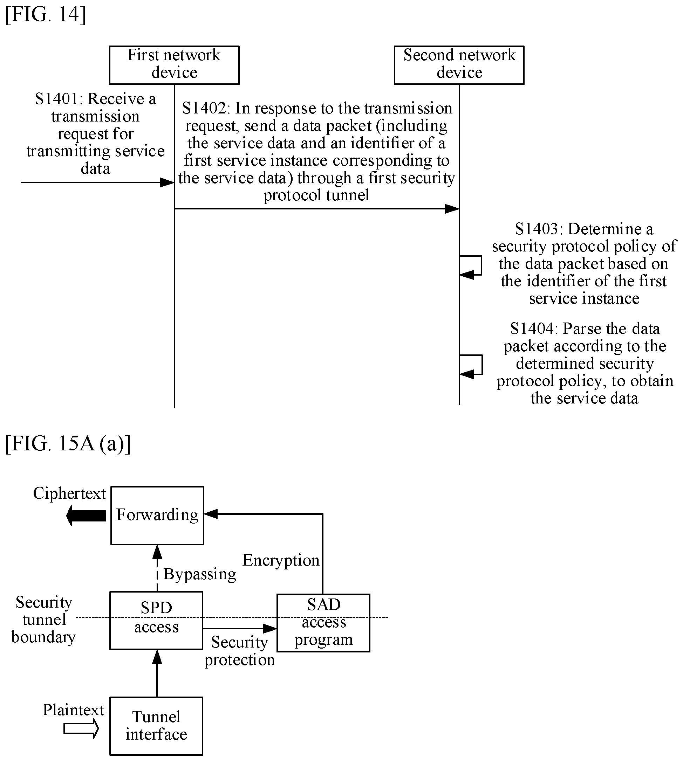

In an example, FIG. 14 is a flowchart of a data transmission method in a security tunnel sharing mechanism according to an embodiment of this application. As shown in FIG. 14, the method may include S1401 to S1404.

S1401: A first network device receives a transmission request for transmitting service data.

The transmission request may be initiated by any operator served by the first network device, and the transmission request may correspond to any service instance. This is not specifically limited.

S1402: In response to a first transmission request, the first network device sends a data packet to a second network device through a first security protocol tunnel, where the data packet includes the service data and an identifier of a first service instance corresponding to the service data.

There are one or more security tunnels between the first network device and the second network device, and the first security protocol tunnel is one of the one or more security tunnels. The identifier of the first service instance is, for example, an ID of the first service instance.

In a possible implementation, the first network device may determine, from the one or more security tunnels based on an association relationship between a security tunnel and a service instance, a security tunnel, for example, the first security protocol tunnel, associated with the first service instance.

The association relationship between the security tunnel and the service instance represents a service instance corresponding to each security tunnel. The association relationship may be determined through negotiation between the first network device and the second network device. For a method and a specific process in which the first network device and the second network device negotiate the service instance corresponding to the security tunnel, refer to the foregoing descriptions. Details are not described herein again.

In an example, the first network device may encrypt the service data according to a security policy corresponding to the first service instance and encapsulate the encrypted service data into the data packet at a tunnel interface of the first security protocol tunnel, and then send the data packet to the second network device through the first security protocol tunnel. The security policy corresponding to the first service instance may be preset in the first network device. For example, a security policy corresponding to one or more security tunnels may be preset in the first network device, and the first network device may determine, from the security policy based on the identifier of the first service instance in the data packet, the security policy corresponding to the first service instance. Alternatively, the security policy corresponding to the first service instance may be generated by the first network device and the second network device. For example, the first network device and the second network device may generate the security policy when negotiating a correspondence between the security tunnel and the service instance.

In an example, the data packet like an IPsec packet may include but is not limited to a plaintext IPv4 packet before encryption, a plaintext IPv6 packet before encryption, a ciphertext IPv4 packet after encryption, a ciphertext IPv6 packet after encryption, an ESP packet, an AH packet, and the like. Correspondingly, the identifier of the first service instance may be carried in one or more of the following: a plaintext IPv4 header before encryption (that is, an unencrypted IPv4 header), a plaintext IPv6 header before encryption (that is, an unencrypted IPv6 header), a plaintext IPv4 extension field before encryption (an unencrypted IPv4 extension header), a plaintext IPv6 extension field before encryption (an unencrypted IPv6 extension header), a ciphertext IPv4 header after encryption (that is, an encrypted IPv4 header), a ciphertext IPv6 header after encryption (that is, an encrypted IPv6 header), a ciphertext IPv4 extension field after encryption (for example, an encrypted IPv4 extension header), a ciphertext IPv6 extension field after encryption (for example, an encrypted IPv6 extension header), and the like.

As described above, an essence of a child SA multiplexing technology is that a plurality of SPDs are mapped to one security association database SAD. Based on this, when the child SA is shared by a plurality of service instances, the first network device may indicate, to the second network device by including an identifier of a service instance in the data packet, a specific SPD to which an SAD is mapped. In an example, the first network device may encrypt the service data based on an SPD and an SAD (that is, the security policy) corresponding to the first service instance and encapsulate the encrypted service data into the data packet at a tunnel interface of the first security protocol tunnel, and then send the data packet to the second network device through the first security protocol tunnel.

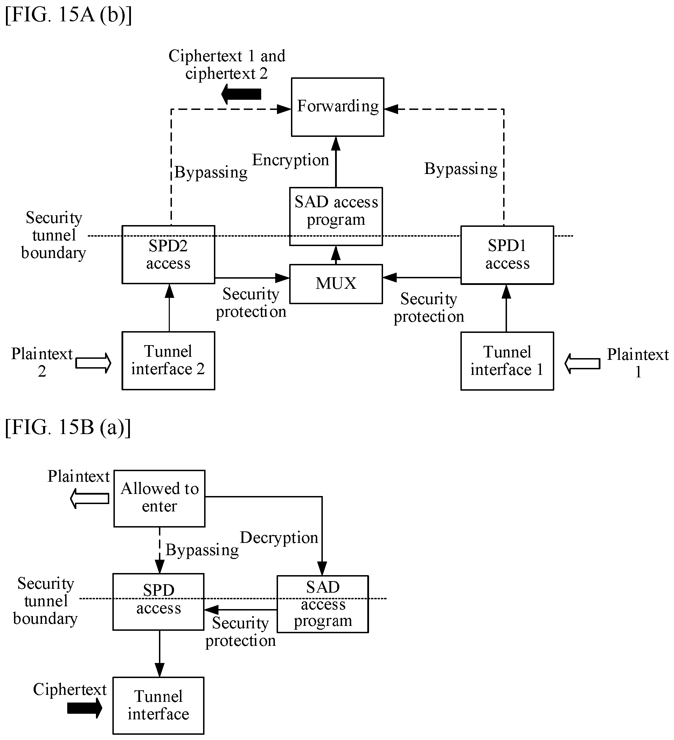

In an example, FIG. 15A (a) and FIG. 15A (b) are diagrams of data packet encryption processes according to an embodiment of this application. FIG. 15A (a) shows a conventional process in which security protection and encryption are performed on plaintext service data at a tunnel interface of a security tunnel based on an SPD and an SAD, and the plaintext service data is finally forwarded to a target device in a ciphertext form. FIG. 15A (b) shows, according to an embodiment of this application, a process in which security protection and encryption are separately performed on plaintext service data (plaintext 1 and plaintext 2 shown in FIG. 15A (b)) of a plurality of different service instances at tunnel interfaces of a security tunnel based on SPDs and an SAD, and finally the plaintext service data is forwarded to a target device in a ciphertext form. A MUX shown in FIG. 15A (b) is a multiplexer. The MUX may add an identifier of a service instance to a packet in the packet encryption process.

It should be noted that a specific encapsulation mode of the data packet is not limited in this application. For example, the encapsulation mode of the data packet may include but is not limited to a tunnel (tunnel) mode or a transport (transport) mode.

In the tunnel (tunnel) mode, an entire IP data packet of a user is encrypted and authenticated. For example, the entire IP data packet is used to calculate an AH or ESP header, and the AH or ESP header and ESP-encrypted service data are encapsulated into a new IP data packet. In an example, for the tunnel (tunnel) mode, a security tunnel usually needs to first encrypt and authenticate service data, and then create a new IP header and add an encrypted IP data packet to the new IP header. In the transport (transport) mode, only a payload of an IP data packet is encrypted and authenticated, and then the payload is added to a new IP header. In an example, for the transport (transport) mode, a security tunnel usually needs to first encrypt and authenticate a payload in service data, and then create a new IP header and add the encrypted payload to the new IP header. For related descriptions of a specific encapsulation mode of the data packet, refer to a conventional technology. Details are not described herein.

In an example, the identifier of the first service instance may be carried in, but is not limited to, any one of the following: an IPv4 header of a plaintext IPv4 packet in a first mode, an IPv6 header of a plaintext IPv4 packet in the first mode, an IPv4 header of a ciphertext IPv4 packet in the first mode, an IPv4 header of a ciphertext IPv6 packet in the first mode, an IPv4 header of a ciphertext IPv6 packet in a second mode, and an IPv6 header of a ciphertext IPv6 packet in the second mode.

It should be noted that a specific encryption mode of the data packet is not limited in this application. In a possible example, the security tunnel may encrypt plaintext service data and the identifier of the first service instance together. Correspondingly, after receiving an encrypted data packet, the second network device may perform decryption by mapping an SPI of a header of the data packet (for example, an ESP packet or an AH packet) to a child SA, and then map, based on the identifier of the first service instance in the plaintext data packet, the plaintext service data to a corresponding service instance for subsequent processing. In another possible example, the first network device may encrypt the plaintext service data, and then encapsulate the encrypted service data and the identifier of the first service instance to obtain a data packet. Correspondingly, after receiving the data packet, the second network device may perform decryption by mapping an SPI of a header of the data packet (for example, an ESP packet or an AH packet) to a child SA, and then map, based on the identifier of the first service instance in the ciphertext data packet, the plaintext service data to a corresponding service instance for subsequent processing.

It should be noted that an IP version of the ciphertext data packet and an IP version of the plaintext data packet are not specifically limited in embodiments of this application, and the two IP versions may be the same or may be different. In an example, the ciphertext data packet in embodiments of this application may be an IPv4 packet or an IPv6 packet.

In an example, the encapsulation mode of the data packet is the tunnel (tunnel) mode. A packet format in which an optional field of an IPv4 header of a plaintext IPv4 packet carries the identifier of the first service instance may be shown as follows:

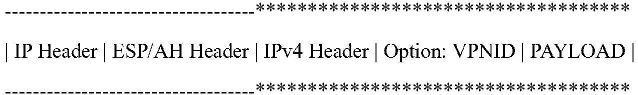

In this example, "-" represents an unencrypted field, and "*" represents an encrypted field. The identifier of the first service instance is located in the Option field.

In an example, the encapsulation mode of the data packet is the tunnel (tunnel) mode. A packet format in which a TTL field of an IPv4 header of a plaintext IPv4 packet carries the identifier of the first service instance may be shown as follows:

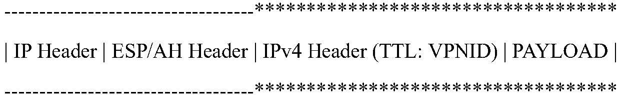

In this example, "-" represents an unencrypted field, and "*" represents an encrypted field. The identifier of the first service instance is located in the TTL field.

In an example, the encapsulation mode of the data packet is the tunnel (tunnel) mode. A packet format in which a destination address extension field of a plaintext IPv6 packet carries the identifier of the first service instance may be shown as follows:

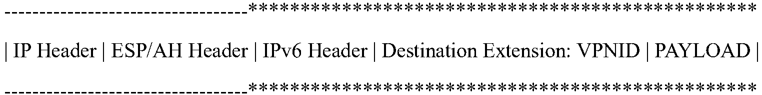

In this example, "-" represents an unencrypted field, and "*" represents an encrypted field. The identifier of the first service instance is located in the Destination Extension field.

In an example, the encapsulation mode of the data packet is the tunnel (tunnel) mode. A packet format in which a flow label field of a plaintext IPv6 packet carries the identifier of the first service instance may be shown as follows:

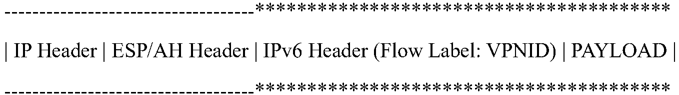

In this example, "-" represents an unencrypted field, and "*" represents an encrypted field. The identifier of the first service instance is located in the Flow Label field of the IPv6 Header.

In an example, the encapsulation mode of the data packet is the tunnel (tunnel) mode. A packet format in which an optional field of an IPv4 header of a ciphertext IPv4 packet carries the identifier of the first service instance may be shown as follows:
The packet format is as follows ("-" indicates an unencrypted field, and "*" indicates an encrypted field):

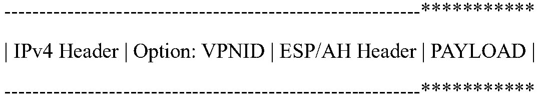

In this example, "-" represents an unencrypted field, and "*" represents an encrypted field. The identifier of the first service instance is located in the Option field.

In an example, the encapsulation mode of the data packet is the tunnel (tunnel) mode. A packet format in which a destination address extension field of a ciphertext IPv6 packet carries the identifier of the first service instance may be shown as follows:

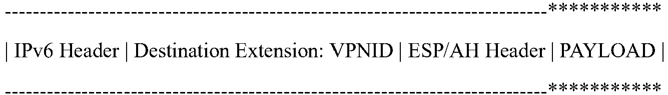

In this example, "-" represents an unencrypted field, and "*" represents an encrypted field. The identifier of the first service instance is located in the Destination Extension field.

In an example, the encapsulation mode of the data packet is the transport (transport) mode. A packet format in which an optional field of an IPv4 header of a ciphertext IPv4 packet carries the identifier of the first service instance may be shown as follows:

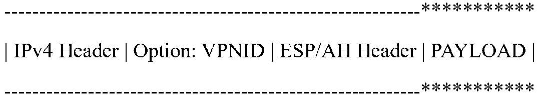

In this example, "-" represents an unencrypted field, and "*" represents an encrypted field. The identifier of the first service instance is located in the Option field.

In an example, the encapsulation mode of the data packet is the transport (transport) mode. A packet format in which a destination address extension field of a ciphertext IPv6 packet carries the identifier of the first service instance may be shown as follows:

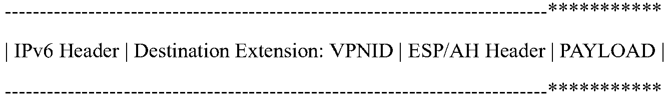

In this example, "-" represents an unencrypted field, and "*" represents an encrypted field. The identifier of the first service instance is located in the Destination Extension field.

S1403: The second network device determines a security policy of the data packet based on the identifier of the first service instance.

In a possible implementation, the second network device may match, from a plurality of security policies based on the first service instance in the data packet, the security policy corresponding to the first service instance. For example, a security policy corresponding to one or more security tunnels may be preset in the second network device. The second network device may match, from the security policy based on the identifier of the first service instance in the data packet, the security policy corresponding to the first service instance. If the security policy can be matched, the second network device may decrypt the data packet according to the matched security policy. If the security policy cannot be matched, processing on the data packet is terminated.

As described above, an essence of a child SA multiplexing technology is that a plurality of SPDs are mapped to one security association database SAD. Based on this, when the child SA is shared by a plurality of service instances, the second network device may determine, based on an identifier of a service instance carried in the data packet, a specific SPD used for decryption.

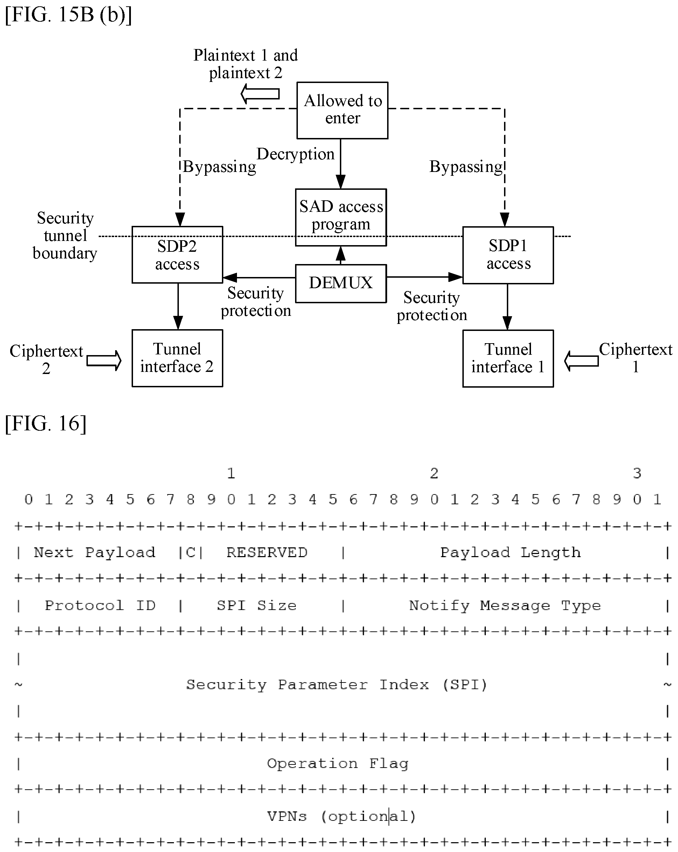

In an example, FIG. 15B (a) and FIG. 15B (b) are diagrams of data packet decryption processes according to an embodiment of this application. FIG. 15B (a) shows a conventional process in which decryption is performed at a tunnel interface of a security tunnel based on an SPD and an SAD. FIG. 15B (b) shows, according to an embodiment of this application, a process in which decryption is performed at a tunnel interface of a security tunnel by selecting matched SPDs based on identifiers of service instances carried in a plurality of data packets (ciphertext 1 and ciphertext 2 shown in FIG. 15B (b)). A DEMUX shown in FIG. 15B (b) is a demultiplexer, and the DEMUX may obtain an identifier of a service instance in ciphertext in a ciphertext decryption process.

S1404: The second network device parses the data packet according to the determined security policy, to obtain the service data.

In a possible implementation, the second network device may decrypt the data packet according to the security policy corresponding to the first service instance, to obtain the service data.

In some embodiments, the network device may further accept modification or deletion of the security tunnel, and the network device may further accept modification (for example, addition or deletion) of a service instance corresponding to the security tunnel.

For example, the first network device may send, to the second network device in response to a request for deleting the security tunnel, a packet indicating to delete the security protocol tunnel between the first network device and the second network device. For another example, the first network device may send, to the second network device in response to a request for deleting an association relationship between the security tunnel and the service instance, a packet indicating to delete an association relationship between a target security tunnel and a target service instance. For another example, the first network device may send, to the second network device in response to a request for adding an association relationship between the security tunnel and the service instance, a packet indicating to add an association relationship between a target security tunnel and a service instance.

In an example, in response to a request for deleting a child SA, the first network device may send an INFORMATIONAL message to the second network device, where the INFORMATIONAL message carries a DELETE payload used to notify the second network device of a to-be-deleted child SA.

For example, the INFORMATIONAL message may be shown as follows:

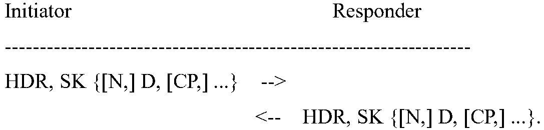

In this example, D represents the DELETE payload, the payload may carry an SPI value of the to-be-deleted child SA, and the first network device and the second network device may delete the corresponding child SA based on the SPI value.

In an example, in response to a request for deleting a service instance associated with a child SA, the first network device may add a NOTIFY payload of an OPERATE_VPN_INSTANCE type, and notify, via the NOTIFY payload, the peer end that the associated service instance needs to be deleted. For example, the network device may send the NOTIFY payload to the peer device via an INFORMATIONAL exchange message, to indicate, to the peer device, that a service instance corresponding to a child SA needs to be deleted.

For example, the network device notifies, by adding a NOTIFY payload type, the peer end that an associated service instance needs to be deleted. A message used to delete a service instance corresponding to a child SA may be shown as follows:

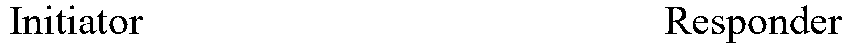

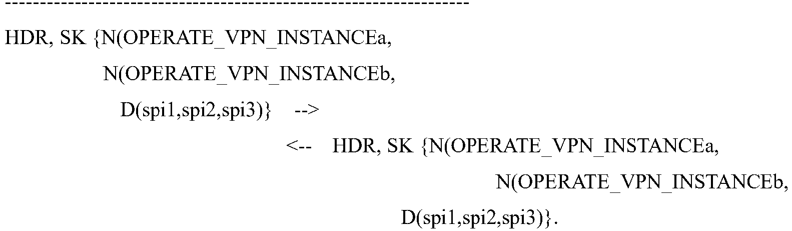

In this example, N(OPERATE_VPN_INSTANCEa, N(OPERATE_VPN_INSTANCEb, and D(spi1,spi2,spi3) are respectively shown as follows:

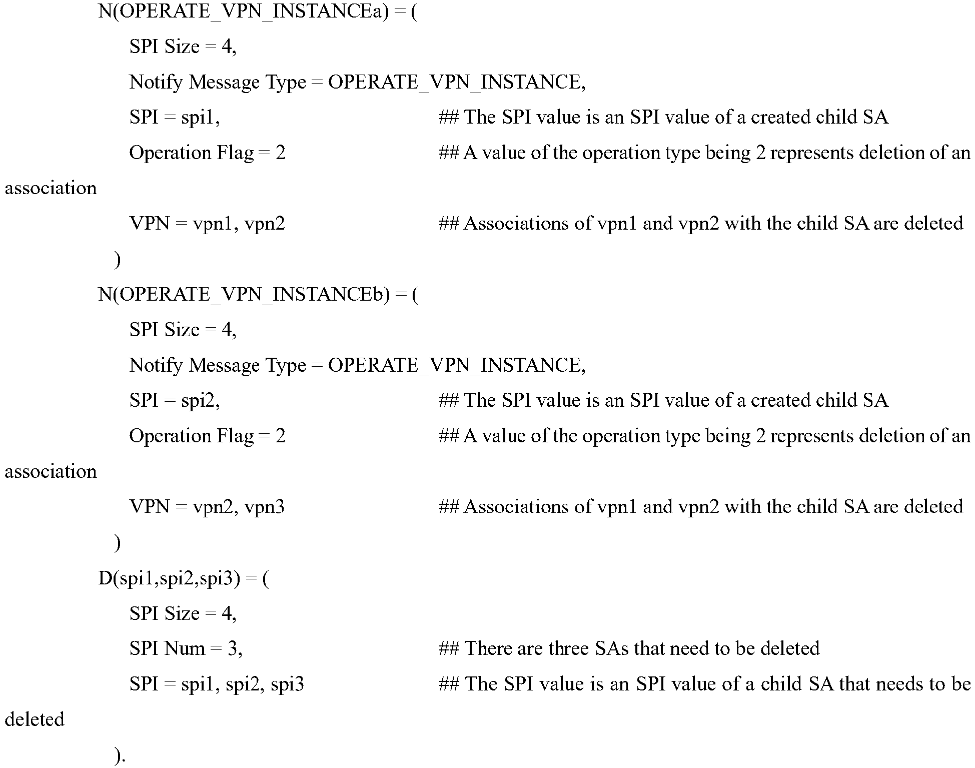

In this example, when an SPI in the NOTIFY payload has a corresponding Notify(OPERATE_VPN_INSTANCE) payload, it indicates that the entire child SA does not need to be completely deleted, but an association relationship that is between the child SA and a service instance and that is indicated by the Notify payload needs to be deleted, for example, spi1 and spi2 in this example. When there is no corresponding Notify(OPERATE_VPN_INSTANCE) payload found in the SPI in the NOTIFY payload, it indicates that the entire child SA is completely deleted, for example, spi3 in this example. Based on this, finally, association relationships between vpn1 and a child SA corresponding to spi1 and between vpn2 and the child SA may be deleted, association relationships between vpn2 and a child SA corresponding to spi2 and between vpn3 and the child SA may be deleted, and a child SA corresponding to spi3 may be completely deleted.

In an example, in response to a request for modifying a service instance corresponding to a child SA, in a possible implementation, the network device may separately create a new child SA. In the new child SA, in addition to traffic of interest associated with an existing service instance, traffic of interest associated with a new service instance is also added. Then the network device separately deletes an old child SA.

For example, a message used to modify a service instance corresponding to a child SA may be shown as follows:

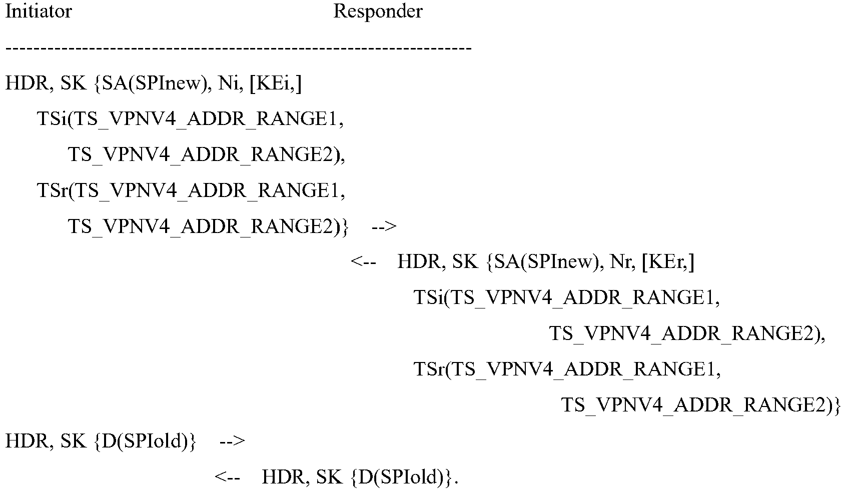

Alternatively, in a possible implementation, the network device may add, in a CREATE_CHILD_SA phase via a CREATE_CHILD_SA message, traffic of interest associated with a new service instance.

Alternatively, in a possible implementation, the network device may use a rekey (Rekey) function to add, in a created new child SA during rekeying, traffic of interest associated with a new service instance.

For example, a message used to modify a service instance corresponding to a child SA may be shown as follows:

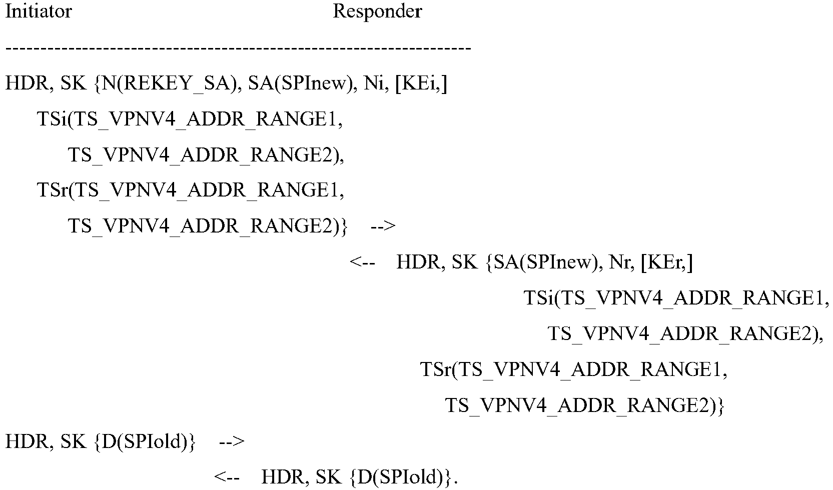

Alternatively, in a possible implementation, the network device may add a NOTIFY payload type, and notify, via the NOTIFY payload, the peer end that an associated service instance needs to be modified (for example, added or deleted). For example, the network device may send the added NOTIFY payload to the peer device via an INFORMATIONAL exchange message, to indicate, to the peer device, that the associated service instance needs to be added to or deleted from the created child SA.

For example, the NOTIFY payload may be shown in FIG. 16. A Notify Message Type field shown in FIG. 16 may be OPERATE_VPN_INSTANCE, and a value Z of OPERATE_VPN_INSTANCE may be any available value that is not occupied in an IKEv2 NOTIFY standard range value, for example, 16447. An Operation Flag field shown in FIG. 16 indicates whether an operation is an association addition operation or an association deletion operation. For example, 1 indicates association addition, and 2 indicates association deletion. A VPNs field exists only when the Operation Flag field is "association deletion". The VPNs field represents that an association relationship between an SA identified by an SPI and a service instance indicated by the field needs to be deleted.

For example, the network device notifies, by adding a NOTIFY payload type, the peer end that an associated service instance needs to be added. A message used to add a service instance corresponding to a child SA may be shown as follows:

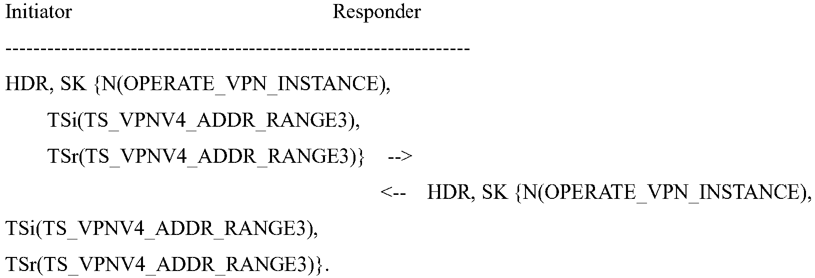

For example, the NOTIFY payload in this example may be specifically shown as follows:

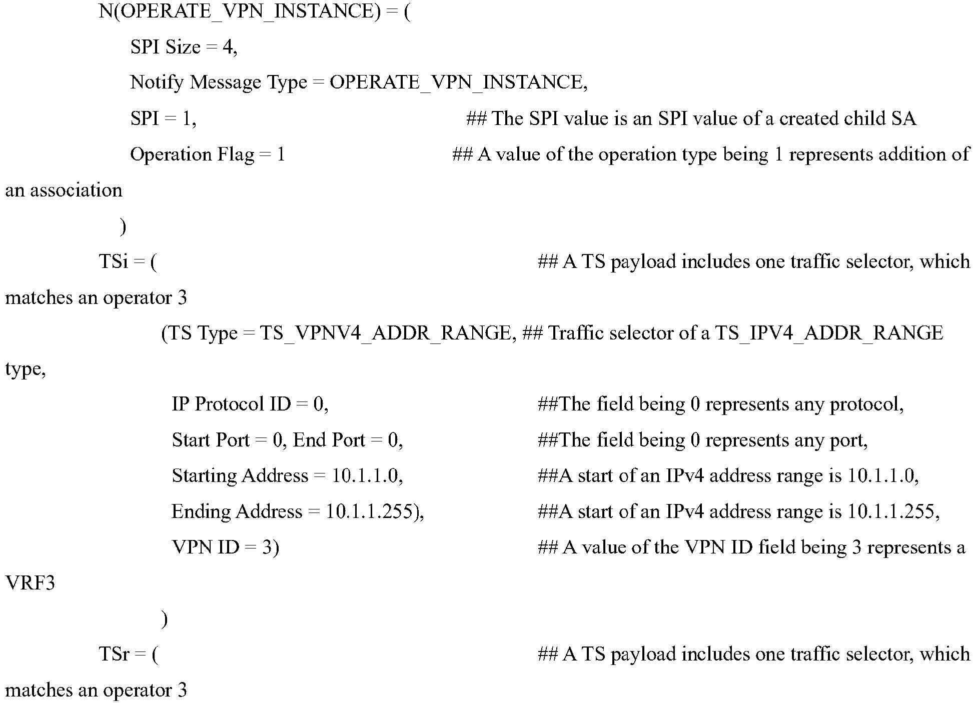

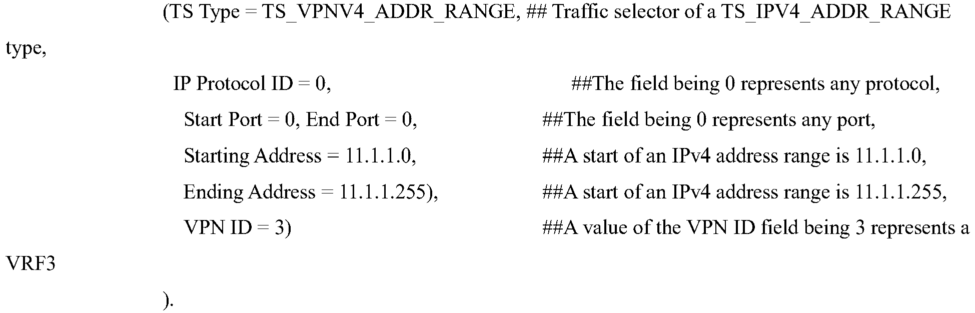

In the example of the NOTIFY payload, the TS payload carrying the traffic selector of the TS_VPNV4_ADDR_RANGE type may indicate that traffic that belongs to a VPN instance "VRF3", sent from the initiator to the responder, and with a source IPv4 address range of "10.1.1.0 to 10.1.1.255" and a destination IPv4 address range of "11.1.1.0 to 11.1.1.255", and traffic that belongs to the VPN instance "VRF3", sent from the responder to the initiator, and with a source IPv4 address range of "11.1.1.0 to 11.1.1.255" and a destination IPv4 address range of "10.1.1.0 to 10.1.1.255" are traffic of interest. The foregoing traffic of interest needs to use the child SA.

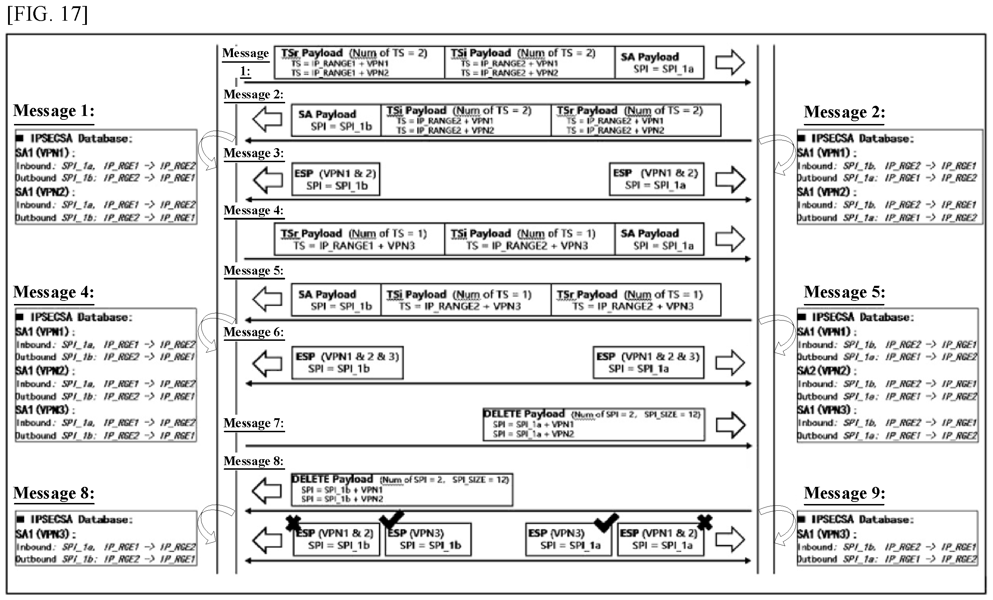

In an example, FIG. 17 is a diagram of specific interaction of an association relationship between a security tunnel and a service instance according to an embodiment of this application. As shown in FIG. 17, a message 1 and a message 2 carry policies of a VPN1 and a VPN2. After completion, an IKE SA and a child SA are generated, but two different TS policies are obtained through negotiation, which respectively correspond to the VPN1 and the VPN2. A message 3 shown in FIG. 17 represents that an ESP packet is sent between VPNs, and packet encryption and decryption are performed, where the ESP packet carries the VPN1 or the VPN2, and an SPI is an SPI obtained through negotiation based on the message 1 and the message 2. A message 4 and a message 5 shown in FIG. 17 represent that a VPN3 is added, and related information of the VPN3 is obtained through negotiation. After the negotiation, both parties may encrypt or decrypt packets of the VPN1, the VPN2, and the VPN3 based on a message 6 shown in FIG. 17. When there is a requirement for deleting a service instance corresponding to a security tunnel, both parties may negotiate, via a message 7 and a message 8 (for example, Delete messages) shown in FIG. 17, a service instance that needs to be deleted, for example, the VPN1 and a VPN12. Finally, as shown in a message 9 in FIG. 17, packet encryption or decryption can be implemented based on only the remaining VPN3.

In some embodiments, the network device may further accept an update of a key (also referred to as "Rekey (Rekey)") of a service instance corresponding to a security tunnel. For example, the first network device may send, to the second network device in response to a request for updating a key of a service instance, a packet indicating to update a key of a service instance associated with a security protocol tunnel.

In an example, in response to a request for updating a key of a child SA, in a possible implementation, the first network device may update, during creation of the child SA, a key of the child SA by using a traffic selector of a TS_VPNV4_ADDR_RANGE type. A rekey message used to update the key may be shown as follows:

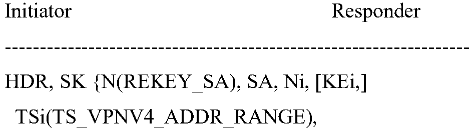

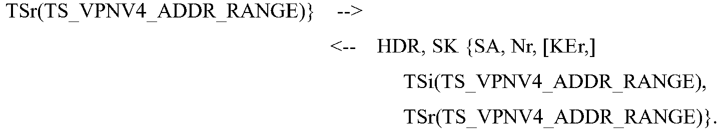

Alternatively, in another possible implementation, the first network device may update, during creation of the child SA, the key of the child SA by using a NOTIFY payload of a VPN_BINDING type, and the message used to update the key may be shown as follows:

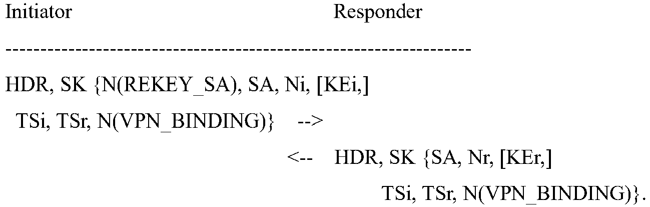

After completing the key update, the first network device and the second network device may delete an old child SA according to a procedure specified in the IKEv2 protocol.

It may be understood that, in embodiments of this application, the network devices support deletion of the security tunnel and modification (for example, addition or deletion) of the association relationship between the security tunnel and the service instance, so that more flexible sharing of the security tunnel can be implemented. For example, a network device may negotiate with another network device at any time regarding security tunnel management based on an actual requirement, including adding or deleting a security tunnel as required, and adding or deleting an association relationship between a security tunnel and a service instance as required. Through on-demand adjustments, on-demand allocation of resources such as system computing, storage, and IP addresses is supported, so as to implement more scientific resource allocation.

It should be understood that the solutions in embodiments of this application may be properly combined for use, and explanations or descriptions of terms in embodiments may be cross-referenced or explained in embodiments. This is not limited.

It should also be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, to implement functions in any one of the foregoing embodiments, the network device (for example, the first network device or the second network device) includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the network device may be obtained through division. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

It should be further understood that each module in the network device may be implemented in a form of software and/or hardware. This is not specifically limited herein. In other words, the network device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired manner (for example, a coaxial cable, an optical fiber, or a digital subscriber line (digital subscriber line, DSL)) or a wireless manner (for example, infrared, radio, and microwave, or the like). The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disk (digital video disk, DVD)), a semiconductor medium (for example, a solid-state drive (solid-state drive, SSD)), or the like.

Method or algorithm steps described in combination with embodiments of this application may be implemented by hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable read-only memory, EPROM), an electrically erasable programmable read-only memory (electrically erasable programmable read-only memory, EEPROM), a register, a hard disk drive, a removable hard disk, a compact disc read-only memory (compact disc read-only memory, CD-ROM), or any other form of storage medium well known in the art. For example, the storage medium is coupled to the processor, so that the processor can read information from the storage medium and write information to the storage medium. Certainly, the storage medium may be a component of the processor. The processor and the storage medium may be located in an application-specific integrated circuit (application-specific integrated circuit, ASIC). In addition, the ASIC may be located in a network device. Certainly, the processor and the storage medium may alternatively exist as discrete components.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

## Claims

1. A method for establishing a security protocol tunnel, applied to a first network device, wherein the method comprises:
sending, to a second network device, a first packet comprising first information, wherein the first packet indicates to establish a security protocol tunnel between the first network device and the second network device, and the first information indicates a service instance of the first network device;
receiving a second packet from the second network device, wherein the second packet is a response of the second network device to the first packet, the second packet carries second information, and the second information indicates a service instance determined by the second network device based on the first information; and
completing the establishment of the security protocol tunnel with the second network device based on the second packet, and associating the security protocol tunnel with the service instance indicated by the second information.

2. The method according to claim 1, wherein the method further comprises:
sending a third packet to the second network device, wherein the third packet indicates to modify the security protocol tunnel between the first network device and the second network device; and
modifying one or more security protocol tunnels between the first network device and the second network device.

3. The method according to claim 2, wherein the modifying the security protocol tunnel between the first network device and the second network device comprises one or more of the following: deleting an association relationship between the security protocol tunnel and the service instance, and adding an association relationship between the security protocol tunnel and the service instance.

4. The method according to claim 3, wherein the third packet indicates to delete the association relationship between the service instance and the security protocol tunnel between the first network device and the second network device, the third packet carries a first message, and the first message comprises an INFORMATIONAL message.

5. The method according to claim 3, wherein the third packet indicates to add the association relationship between the security protocol tunnel and the service instance, the third packet carries a second message, and the second message comprises a CREATE_CHILD_SA message, an INFORMATIONAL message, or an IKE_SA_INIT message.

6. The method according to any one of claims 1 to 5, wherein the method further comprises:
sending a fourth packet to the second network device, wherein the fourth packet indicates that the first network device has a capability of associating a service instance with a security protocol tunnel; and
receiving a fifth packet from the second network device, wherein the fifth packet indicates that the second network device has the capability of associating a service instance with a security protocol tunnel.

7. The method according to claim 6, wherein the fourth packet carries a third message, and the third message comprises an IKE_SA_INIT message, an IKE_AUTH message, a CREATE_CHILD_SA message, and an INFORMATIONAL message.

8. A data transmission method, applied to a first network device, wherein the method comprises:
sending, to a second network device through a first security protocol tunnel, a data packet carrying service data, wherein the data packet comprises an identifier of a first service instance corresponding to the service data, and the first security protocol tunnel has an association relationship with the first service instance.

9. The method according to claim 8, wherein the identifier of the first service instance is located in one or more of the following fields of the data packet: an unencrypted IPv4 header, an encrypted IPv4 header, an unencrypted IPv6 header or IPv6 extension header, and an encrypted IPv6 header or extension header.

10. The method according to claim 8 or 9, wherein before sending the data packet to the second network device through the first security protocol tunnel, the method further comprises:
at a tunnel interface of the first security protocol tunnel, encrypting the service data according to a security policy corresponding to the first service instance, and then encapsulating the encrypted service data into the data packet.

11. The method according to any one of claims 8 to 10, wherein the security protocol tunnel comprises an IPsec tunnel.

12. A method for establishing a security protocol tunnel, applied to a second network device, wherein the method comprises:
receiving a first packet from a first network device, wherein the first packet indicates to establish a security protocol tunnel between the first network device and the second network device, the first packet comprises first information, and the first information indicates a service instance of the first network device;
sending a second packet to the first network device, wherein the second packet is a response of the second network device to the first packet, the second packet carries second information, and the second information indicates a service instance determined by the second network device based on the first information; and
completing the establishment of the security protocol tunnel with the first network device based on the first packet, and associating the security protocol tunnel with the service instance indicated by the second information.

13. The method according to claim 12, wherein the method further comprises:
receiving a third packet from the first network device, wherein the third packet indicates to modify the security protocol tunnel between the first network device and the second network device; and
modifying one or more security protocol tunnels between the first network device and the second network device based on the third packet.

14. The method according to claim 13, wherein the modifying the security protocol tunnel between the first network device and the second network device comprises one or more of the following: deleting an association relationship between the security protocol tunnel and the service instance, and adding an association relationship between the security protocol tunnel and the service instance.

15. The method according to claim 14, wherein the third packet indicates to delete the association relationship between the service instance and the security protocol tunnel between the first network device and the second network device, the third packet carries a first message, and the first message comprises an INFORMATIONAL message.

16. The method according to claim 14, wherein the third packet indicates to add the association relationship between the security protocol tunnel and the service instance, the third packet carries a second message, and the second message comprises a CREATE_CHILD_SA message, an INFORMATIONAL message, or an IKE_SA_INIT message.

17. The method according to any one of claims 12 to 16, wherein the method further comprises:
receiving a fourth packet from the first network device, wherein the fourth packet indicates that the first network device has a capability of associating a service instance with a security protocol tunnel; and
sending a fifth packet to the first network device, wherein the fifth packet indicates that the second network device has the capability of associating a service instance with a security protocol tunnel.

18. The method according to claim 17, wherein the fifth packet carries a third message, and the third message comprises an IKE_SA_INIT message, an IKE_AUTH message, a CREATE_CHILD_SA message, and an INFORMATIONAL message.

19. A data transmission method, applied to a second network device, wherein the method comprises:
receiving a data packet sent by a first network device through a first security protocol tunnel, wherein the data packet comprises service data and an identifier of a first service instance corresponding to the service data, the first security protocol tunnel is one of one or more security protocol tunnels between the first network device and the second network device, and the first security protocol tunnel has an association relationship with the first service instance;
determining a security protocol policy of the data packet based on the identifier of the first service instance; and
parsing the data packet according to the security protocol policy, to obtain the service data.

20. The method according to claim 19, wherein the identifier of the first service instance is located in one or more of the following fields of the data packet: an unencrypted IPv4 header, an encrypted IPv4 header, an unencrypted IPv6 header or IPv6 extension header, and an encrypted IPv6 header or extension header.

21. The method according to claim 19 or 20, wherein the parsing the data packet, to obtain the service data comprises:
parsing the data packet according to a security protocol policy corresponding to the first service instance, to obtain the service data.

22. The method according to any one of claims 19 to 21, wherein the security protocol tunnel comprises an IPsec tunnel.

23. A communication system, wherein the communication system comprises a first network device and a second network device, the first network device is configured to implement the method according to any one of claims 1 to 7 or claims 8 to 11, and the second network device is configured to implement the method according to any one of claims 12 to 18 or claims 19 to 22.

24. A network device, wherein the network device comprises:
a transceiver, configured to send and receive signals;
a memory, configured to store computer program instructions; and
a processor, configured to execute the computer program instructions, to support the network device in implementing the method according to any one of claims 1 to 11 or claims 12 to 22.

25. A computer-readable storage medium, wherein the computer-readable storage medium stores computer program instructions, and when the computer program instructions are executed by a processing circuit, the method according to any one of claims 1 to 11 or claims 12 to 22 is implemented.

26. A computer program product comprising instructions, wherein when the computer program product runs on a computer, the computer is caused to perform the method according to any one of claims 1 to 11 or claims 12 to 22.

27. A chip system, wherein the chip system comprises a processing circuit and a storage medium, the storage medium stores computer program instructions, and when the computer program instructions are executed by the processing circuit, the method according to any one of claims 1 to 11 or claims 12 to 22 is implemented.
